# FASCICULE DE BREVET EUROPEEN

(11) **EP 0 535 760 B1**
(45) Date de publication et mention de la délivrance du brevet: **16.09.1998**
(21) Numéro de dépôt: 92203032.5
(22) Date de dépôt: 02.10.1992
(51) Int. Cl.: G06F 11/14, G06F 11/20

(54) **Procédé de discrimination temporelle de pannes dans un système hiérarchisé de traitement de données, et système hiérarchisé de traitement de données adapté à sa mise en oeuvre**
Verfahren und Vorrichtung zur zeitbedingten Unterscheidung zwischen Fehlern in einem hierarchischen Datenverarbeitungssystem
Method and apparatus of time discrimination between faults in a hierarchical data processing system

(30) Priorité: 04.10.1991 FR 9112249
(43) Date de publication de la demande: 07.04.1993
(73) Titulaire: AEROSPATIALE Société Nationale Industrielle, 75781 Paris Cédex 16 (FR)
(72) Inventeur: Leyre, Xavier, Résidence Les Rêves d'Or, F-06400 Cannes (FR); Senaux, Michel, F-06560 Valbonne (FR)
(74) Mandataire: Rinuy, Santarelli

(56) Documents cités:
- EP-A- 0 358 785
- US-A- 4 553 204
- MICROPROCESSING AND MICROPROGRAMMING, VOL.27, No.1/5, Aôut 1989, Amsterdam, NL, pp.233-237, Esko Strömmer

## Description

L'invention concerne le traitement des pannes susceptibles d'apparaître à divers niveaux d'un système de traitement de données notamment, mais pas nécessairement, embarqué à bord d'un véhicule spatial devant présenter une grande autonomie en cas de panne dans un environnement hostile.

Un système de traitement de données pour véhicule spatial doit satisfaire en pratique à plusieurs exigences, à savoir une grande fiabilité (grâce autant que possible à une capacité à surmonter des pannes de façon autonome), une masse et un coût minimaux.

En fait la minimisation globale du coût suppose la minimisation non seulement du coût matériel du système de traitement de données, mais aussi des besoins de surveillance au sol et de la durée des possibles interruptions de mission.

Des systèmes de traitement de données à destination spatiale ont déjà été proposés, qui sont décrits notamment dans "SPACE SHUTTLE AVIONICS SYSTEM-NASA SP-504 - 1989 - J.F. HANAWAY, R.W. MOOREHEAD" ou dans "Study of a Unified Hardware and Software Fault Tolerant Architecture - NASA Contractor Report 181759 - January 1989 - J. LALA et al. Ces systèmes ont l'inconvénient de mettre en oeuvre plus de deux unités par fonction (une unité nominale et une unité redondante), ce qui conduit donc à une masse et un coût importants.

D'autres solutions telles que celle décrite dans « A 6800 Coprocessor for Error Detection in Micro-computers : The PAD - Proceedings of the IEEE, Vol. 74, n° 5, May 1986, P. 723 - Y.CROUZET, J.CHAVADE », ont notamment comme inconvénient de mettre en oeuvre deux microprocesseurs devant fonctionner simultanément, ce qui conduit à une complexité notable.

Le détail de la procédure de remplacement d'un calculateur défectueux par un calculateur de réserve, telle qu'effectuée par un calculateur de coordination relié à ces calculateurs par plusieurs systèmes de bus, est décrit dans le document EP-A-0 358 785 à propos de la signalisation ferroviaire.

Mais il ne s'agit pas d'un vrai système centralisé hiérarchisé de traitement de données : chaque calculateur assume sa propre fonction et il n'y a pas d'indications sur les éventuelles unités qui en dépendent ni a fortiori sur leur remplacement.

L'invention a trait par contre à un système centralisé hiérarchisé de traitement de données, c'est-à-dire une seule unité de calcul en service à un moment donné, et ne nécessitant, pour atteindre les niveaux habituels des fiabilité, qu'un très petit nombre d'éléments disponibles en redondance froide (typiquement un seul élément par fonction).

L'invention a ainsi pour objet un procédé de détection/passivation de pannes dans un tel système centralisé hiérarchisé, qui permette de tirer le meilleur parti possible des calculateurs en état de marche, il peut même n'y en avoir qu'un seul, ainsi que des divers autres éléments du système, en limitant les risques de reléguer un élément encore utilisable et d'en commander par exemple prématurément une reconfiguration (reconfiguration = remplacement par un élément disponible en redondance froide) et ce, avec une grande rapidité de réaction.

L'invention propose ainsi un procédé de détection et de passivation de pannes dans un système centralisé hiérarchisé de traitement de données autonome en cas de pannes dans un environnement hostile notamment, mais pas nécessairement, embarqué à bord d'un véhicule spatial, comportant un module processeur, un bus de traitement de données connecté à ce module processeur et des unités connectées à ce bus et caractérisé en ce qu'on surveille des signaux d'état représentatifs du fonctionnement, bon ou mauvais, du module processeur et de chacune des unités et, lorsque l'on détecte un signal d'état représentatif d'un mauvais fonctionnement du module processeur, on commande un cycle prédéterminé de reconfiguration de module processeur et, lorsque l'on détecte un signal représentatif d'un mauvais fonctionnement d'une unité, on commande le remplacement de cette unité par une unité disponible pour la même fonction en redondance froide, après une temporisation au moins égale à la durée d'un tel cycle de reconfiguration de module processeur, cette temporisation étant inhibée lors du déclenchement d'un tel cycle de reconfiguration de module processeur.

On appréciera qu'une telle discrimination temporelle des niveaux évite d'avoir à recourir à une logique complexe pour identifier le vrai composant fautif : on ne réagit à un niveau donné qu'après une temporisation garantissant que le système a eu le temps de bénéficier d'une éventuelle réaction du niveau supérieur et on inhibe alors toute demande de réaction en suspens à un niveau inférieur.

Selon des dispositions préférées éventuellement combinées :
- on fait surveiller les signaux d'état représentatifs du fonctionnement des unités par le module processeur, et on fait exécuter un tel remplacement d'unité par un pilote extérieur au module processeur,
- cette temporisation est comprise entre 0,5 et 50 secondes, de préférence entre 0,5 et 5 secondes,
- on fait surveiller en outre par le module processeur des signaux d'état représentatifs du bon ou mauvais fonctionnement d'unités élémentaires connectées au bus par lesdites unités et, lorsque le module processeur détecte un signal d'état représentatif d'un mauvais fonctionnement de l'une de ces unités élémentaires, on fait exécuter par ce module processeur le remplacement de cette unité élémentaire par une unité élémentaire disponible pour la même fonction en redondance froide après une seconde temporisation au moins égale à la somme de la temporisation prévue avant le remplacement d'une unité par une unité disponible en redondance froide et de la durée nécessaire à ce remplacement, cette seconde temporisation étant inhibée par un tel remplacement d'unité, ou par le déclenchement d'un cycle de reconfiguration de module processeur,
- cette seconde temporisation est comprise entre 1 et 10 secondes,
- la première temporisation étant de 0,5 seconde environ, cette seconde temporisation est de 1 seconde environ,
- au module processeur étant connectées une pluralité d'unités réparties sur au moins un niveau, on surveille en outre, indépendamment desdites unités et du module processeur, des signaux d'état représentatifs de l'état ou de l'attitude du véhicule spatial et, lorsque l'on détecte que l'un de ces signaux d'état franchit une valeur de seuil, on fait exécuter, indépendamment du module processeur, le remplacement du module processeur, du bus et toutes les unités par d'éventuels modules processeurs, bus et unités disponibles en redondance froide, et ce après une temporisation globale au moins égale au temps nécessaire pour effectuer successivement le remplacement du module processeur, puis celui des unités niveau par niveau en partant du niveau le plus élevé,
- cette temporisation globale est d'au moins une minute,
- cette temporisation globale est comprise entre 1 et 10 minutes,
- ce nombre seuil est égal à 1,
- cette durée prédéterminée est comprise entre 5 et 60 secondes, de préférence de 10 secondes environ,
- pour effectuer un tel cycle de reconfiguration de module processeur ou un remplacement d'unité, on commande la génération d'une impulsion de reconfiguration de caractéristiques données, et pendant que les signaux d'état sont représentatifs d'un bon fonctionnement, on commande périodiquement une procédure de test comportant la génération d'au moins une impulsion de test ayant l'une seulement de ces caractéristiques données, et on vérifie que cette impulsion de test a celle, visée, des caractéristiques données,
- lesdites caractéristiques données sont la tension et la durée de l'impulsion de reconfiguration,
- ce cycle prédéterminé de reconfiguration de module processeur comporte une extinction et un rallumage de ce module processeur,
- on déclenche une horloge lors du déclenchement d'un cycle de reconfiguration de module processeur et on compte le nombre de fois où, au cours d'une durée prédéterminée à compter de ce déclenchement, on détecte un signal d'état représentatif d'un mauvais fonctionnement du module processeur, on compare ce nombre à un nombre seuil et, si ce nombre atteint ce nombre-seuil, on commande le remplacement de ce module processeur par un autre module processeur disponible en redondance froide.

L'invention propose également, très généralement, un procédé de détection et de passivation de pannes dans un système centralisé hiérarchisé de traitement de données devant présenter une grande autonomie en cas de panne dans un environnement hostile notamment, mais pas nécessairement, embarqué à bord d'un véhicule spatial, comportant des composants répartis sur plusieurs niveaux dont un module processeur sur le niveau le plus élevé, caractérisé en ce qu'on surveille des signaux d'état représentatifs du fonctionnement, bon ou mauvais, de ces composants et, lorsque l'on détecte un signal d'état représentatif d'un mauvais fonctionnement du module processeur, on commande un cycle prédéterminé de reconfiguration de module processeur et, lorsque l'on détecte un signal représentatif du mauvais fonctionnement d'un composant à un niveau inférieur, on remplace ce composant par un autre composant de même niveau disponible pour la même fonction en redondance froide, après une temporisation d'autant plus longue que le niveau de ce composant est bas, cette temporisation étant prédéterminée pour ce niveau en sorte d'être supérieure à la somme d'une temporisation prédéterminée choisie pour le niveau immédiatement supérieur et de la durée du remplacement d'un composant de ce niveau immédiatement supérieur, la temporisation prédéterminée choisie pour le niveau immédiatement inférieur à celui du module processeur étant au moins égale à la durée d'un tel cycle de reconfiguration de module processeur, toute temporisation déclenchée pour un composant d'un niveau donné étant inhibée par le déclenchement à un niveau supérieur soit d'un cycle de reconfiguration du module processeur, soit d'un cycle de remplacement d'un composant dont dépend ce composant donné.

En vue de la mise en oeuvre de ce procédé, l'invention propose également un système centralisé hiérarchisé de traitement de donnés autonomes en cas de pannes dans un environnement hostile, notamment mais pas nécessairement, embarqué à bord d'un véhicule spatial, comportant une unité de calcul et des unités réparties sur un niveau inférieur et connectés à un module processeur faisant partie de l'unité de calcul, caractérisé en ce que l'unité de calcul est conçue en sorte de surveiller des signaux d'état représentatifs du fonctionnement, bon ou mauvais, du module processeur et de chacune des unités et comporte en outre un module de reconfiguration séparé du module processeur, comportant, reliés à un bus de transfert de données, un bloc de reconfiguration de module processeur adapté à émettre en fonction des signaux d'état une impulsion destinée à déclencher un cycle de reconfiguration de module processeur, un bloc de vérification de test connecté à la sortie du bloc d'autotest, un bloc de reconfiguration de module processeur, un bloc-mémoire de sauvegarde, un module d'interface avec le module processeur, et un second bloc de reconfiguration connecté audit bus et adapté à générer, sur commande du module processeur en fonction des signaux d'état, une impulsion de reconfiguration destinée à l'une des unités dudit niveau inférieur, après une temporisation au moins égale à la durée d'un tel cycle de reconfiguration de module processeur.

Selon des dispositions préférées éventuellement combinées :
- le module processeur comporte une borne de commande marche/arrêt reliée à une sortie du bloc de reconfiguration de module processeur, et ce module de reconfiguration ayant une borne de commande marche/arrêt connectée à un module indépendant du module processeur,
- cette unité de calcul comporte un second module processeur disponible en redondance froide et un second module de reconfiguration en redondance froide,
- ce module de reconfiguration est en outre connecté par des lignes indépendantes des unités, du bus et du module processeur, à des capteurs sensibles à des paramètres d'état représentatifs de l'état du véhicule spatial.

Des objets, caractéristiques et avantages de l'invention ressortent de la description qui suit, donnée à titre d'exemple non limitatif, en regard des dessins annexés sur lesquels :
- la figure 1 est un schéma de principe d'un système de traitement de données pour satellite conforme à l'invention,
- la figure 2 est un schéma de principe de l'unité de calcul embarquée,
- la figure 3 est un schéma fonctionnel externe du module de reconfiguration que comporte l'unité de calcul embarquée,
- la figure 4 est un schéma fonctionnel interne de ce module de reconfiguration,
- la figure 5 est un schéma fonctionnel du bloc d'autotest que comporte le module de reconfiguration,
- la figure 6 est un schéma fonctionnel du bloc de détection et de validation d'alarmes que comporte le module de reconfiguration,
- la figure 7 est un schéma fonctionnel du bloc de reconfiguration de module processeur que comporte le module de reconfiguration,
- la figure 8 est un schéma fonctionnel du bloc de reconfiguration de coupleurs que comporte le module de reconfiguration,
- la figure 9 est un schéma fonctionnel des blocs logiques de vérification associés aux blocs de reconfiguration des figures 7 et 8,
- la figure 10 est un schéma de principe d'une reconfiguration de niveau I,
- la figure 11 est un schéma de principe d'une reconfiguration de niveau II,
- la figure 12 est un schéma de principe d'une reconfiguration combinée de niveaux I et II,
- la figure 13 est un diagramme corrélant le flux minimum de densité de particules en fonction de leur énergie pour divers pourcentages de temps,
- la figure 14 est un diagramme d'état correspondant au module de reconfiguration dans le cas d'une alarme de niveau III,
- la figure 15 est un organigramme correspondant au diagramme de la figure 14,
- la figure 16 est une vue schématique d'une reconfiguration du niveau III.2,
- la figure 17 est un schéma de principe de la logique de reconfiguration de niveau IV, et
- la figure 18 est un chronogramme montrant la stratégie de discrimination temporelle prévué pour le traitement des alarmes de niveau I, II, III et IV.

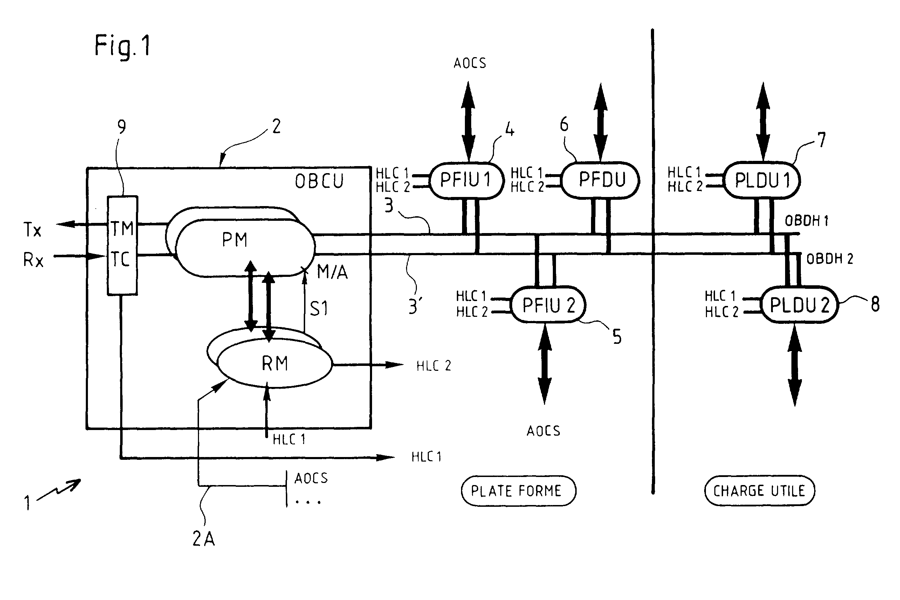

La figure 1 représente un système de traitement de données, repéré 1 dans son ensemble, concernant un véhicule spatial, par exemple un satellite (non représenté) de tout type connu, par exemple stabilisé 3-axes, en pratique sur orbite géostationnaire ou héliosynchrone.

Ce système 1 est centralisé et hiérarchisé. Il comporte principalement une unité de calcul (ou calculateur) embarquée ("On Board Computer Unit" en anglais) désignée en abrégé par OBCU et repérée 2, deux bus redondants 3 et 3' (de préférence des bus connus sous l'appellation OBDH pour On Board Data Handling) pour lesquels la vitesse de transmission des données peut aller jusqu'à 512 kbps (kilobits par seconde) et diverses unités d'interface connectées aux éléments d'entrée et de sortie du système 1. Ces unités d'interface ou coupleurs comportent ici deux unités 4 et 5 d'interface avec la plate-forme du véhicule spatial, notées en abrégé PFIU (pour PlatForm Interface Unit), par exemple spécifiques des détecteurs/actionneurs du système de contrôle d'attitude et d'orbite du satellite ici repéré en abrégé AOCS (pour "Attitude and Orbit Control Subsystem"), une unité de distribution 6 notée en abrégé PFDU (pour PlatForm Distribution Unit) chargée de la distribution de puissance destinée à la plate-forme et deux (voire une seule) unités de distribution 7 et 8 destinées à la charge utile notées en abrégé PLDU (pour Pay Load Distribution Unit) pour en gérer la distribution de puissance et le comportement thermique (le nombre de ces unités dépend en fait de la taille de la charge utile).

L'unité OBCU repérée 2 ainsi que les coupleurs 4 à 8 sont à redondance froide interne (cela est visualisé en ce qui concerne l'unité 2 par la duplication de ses constituants).

L'unité OBCU repérée 2 comporte un module de communication 9 adapté à émettre des informations Tx vers le sol et à en recevoir des commandes Rx. L'unité OBCU repérée 2 et les coupleurs 4 à 8 échangent, indépendamment des bus 3 (ou 3'), des signaux de commande HLC1 ou HLC2 (HLC correspondant à High Level Command). Ces signaux correspondent par exemple à des grandeurs telles que mise en marche/arrêt de relais.

Selon une caractéristique avantageuse de l'invention, originale en soi, des liaisons directes repérées 2A, de type électrique, radioélectrique ou optique, sont prévues entre certains capteurs (terrestres, solaires ...) du système de contrôle d'attitude et d'orbite, voire des capteurs relatifs au régime d'alimentation électrique, au régime thermique ou autres, et l'unité OBCU pour transmettre à cette dernière des paramètres, notamment des paramètres inertiels du satellite, sélectionnables à bord, tels que présence ou non de la Terre ou du Soleil dans le champ de vue de leurs détecteurs respectifs. Plus généralement ces lignes peuvent aussi provenir des unités relatives à l'alimentation ou au contrôle thermique du satellite.

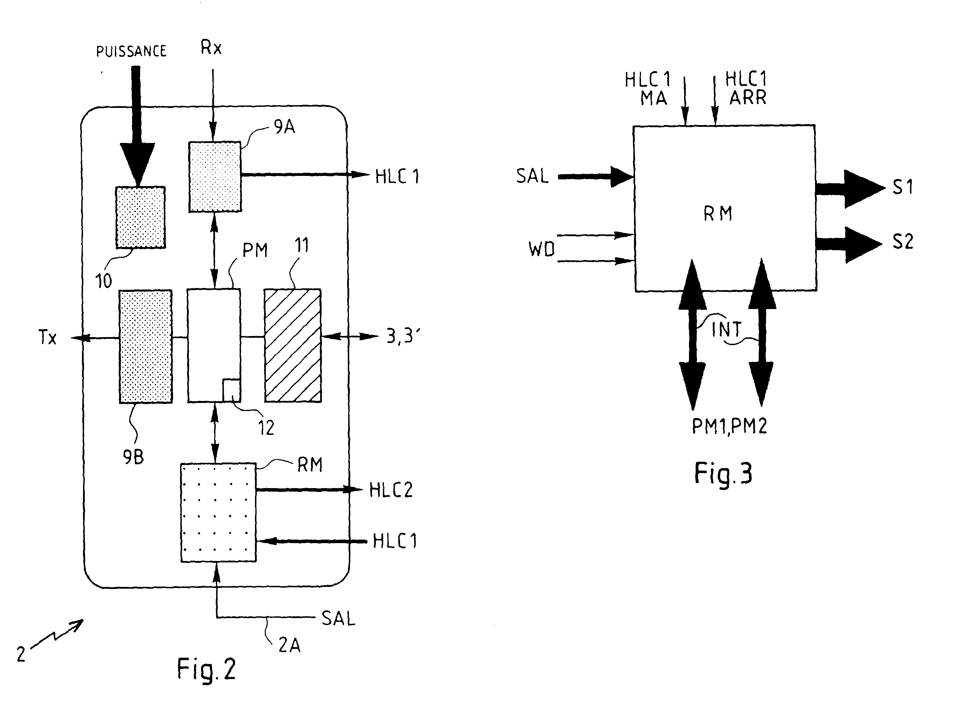

La figure 2 est un schéma de principe de l'unité OBCU repérée 2. Cette unité comporte ici, avec une recondance interne rappelons-le, un module processeur PM, (comprenant un microprocesseur équipé notamment de mémoires volatiles RAM, et non volatiles ROM) un module de puissance repéré 10, des modules de télécommande 9A et de télémétrie 9B formant conjointement le module de communication 9, un module de gestion de bus 11, un module de chien de garde repéré 12 et, selon un aspect important de l'invention, un module de reconfiguration RM auquel aboutissent les liaisons 2A.

Ce module de reconfiguration RM est destiné à permettre une reconfiguration commandée à bord, ce qui réduit d'autant la charge de surveillance au sol et surtout les délais de réaction. En effet, le souci de réduire les risques d'interruption de mission ("outage" en anglais) conduit à deux besoins : d'un côté l'ensemble 1 doit être tolérant aux pannes ("fail safe" en anglais) dans le cas d'une panne unique, d'autre part la restauration après une telle panne doit être traitée, de façon automatique à bord.

On appréciera dans la suite qu'une simple structure à redondance froide interne permet grâce à l'invention de répondre à ces besoins tout en minimisant la masse et le coût du système 1.

Pour assurer une reconfiguration commandée à bord, il a fallu déterminer une classification des pannes de manière à pouvoir élaborer une stratégie automatique pour y faire face.

Une classification à quatre niveaux a été retenue, correspondant à des degrés croissants de gravité de panne.

Le premier niveau, ou niveau I, concerne toutes les unités (détecteurs et actionneurs notamment) qui sont raccordées au bus 3 par les coupleurs 4 à 8.

Le deuxième niveau, ou niveau II, concerne les divers coupleurs 4 à 8.

Le troisième niveau, ou niveau III, concerne le module processeur PM.

Et le quatrième niveau, ou niveau IV, concerne l'ensemble du système, à savoir des unités, des coupleurs, des bus et du module processeur, en fonction de signaux SAL, appelés signaux d'alarme-système, transitant par les lignes 2A, qui correspondent à des anomalies dans les paramètres ou grandeurs des capteurs considérés.

Il est clair que la surveillance du module processeur PM et du système 1 dans son ensemble ne peut être assurée par le module processeur PM lui-même. L'invention prévoît un module distinct chargé d'un rôle de supervision : il s'agit du module de reconfiguration RM. Un tel rôle de supervision aurait peut être pu être assuré en utilisant plusieurs modules processeurs (il en aurait fallu au moins trois en redondance chaude), mais le principe d'un module de reconfiguration a l'avantage d'une moindre masse, d'un moindre coût et d'une moindre complexité et donc d'une plus grande fiabilité.

Ainsi qu'on va le voir, ce module de reconfiguration permet une grande autonomie à bord permettant d'éliminer les risques d'interruption de mission pour des pannes de niveau I, II ou III.

En fait, ce module de reconfiguration n'intervient qu'à partir du niveau II : pour ce niveau de pannes il se contente d'exécuter, après une temporisation appropriée (voir plus loin), des éventuels ordres de reconfiguration générés par logiciel par le module processeur PM, à partir d'une détection de panne effectuée elle aussi par logiciel au travers du bus 3.

Pour le niveau I, aussi bien la détection d'une panne que le déclenchement et l'exécution d'une éventuelle reconfiguration, après une temporisation plus longue que pour le niveau II (voir plus loin), sont assurées par logiciel, au travers du bus 3.

La mise en pratique de ce qui précède est en soi est à la portée de l'homme de métier sans autre explication.

Pour le niveau III la surveillance est assurée par logiciel en ce qui concerne les périphériques du module processeur, et par voie matérielle (chien de garde) en ce qui concerne le matériel. En fait deux niveaux de gravité seront distingués.

Cela sera développé plus loin.

Le module de reconfiguration a trois fonctions principales :
- détection et validation des alarmes,
- actions de reconfiguration (remplacement dans le système d'un élément par un élément disponible en redondance froide), et
- sauvegarde de données fiables qui doivent rester disponibles à tout moment.

Le but de ce module de reconfiguration est de générer, en fonction de signaux d'alarme, des signaux de commande appropriés visant à ne provoquer que la reconfiguration de la partie du système qui en a besoin.

La figure 3 montre les informations échangées par ce module avec l'extérieur.

Les alarmes traitées par ce module RM peuvent être réparties en trois groupes :
- alarmes-système (niveau IV) correspondant aux signaux SAL,
- alarmes de chien de garde correspondant aux signaux WD,
- alarmes des coupleurs correspondant à des signaux de déclenchement venant du module processeur actif.

Les signaux HLC1-MA et HLC1-ARR représentent des signaux provenant du sol et commandant la mise en marche ou l'arrêt du module de reconfiguration RM.

Le module de reconfiguration communique avec le module processeur nominal repéré PM1 (ou avec le module redondant PM2), notamment pour la réception des commandes de reconfiguration des coupleurs, par des interfaces parallèles repérés INT.

Le module génère des signaux de sélection d'activation-désactivation destinés aux modules processeurs (signaux S1) ou aux coupleurs (signaux S2).

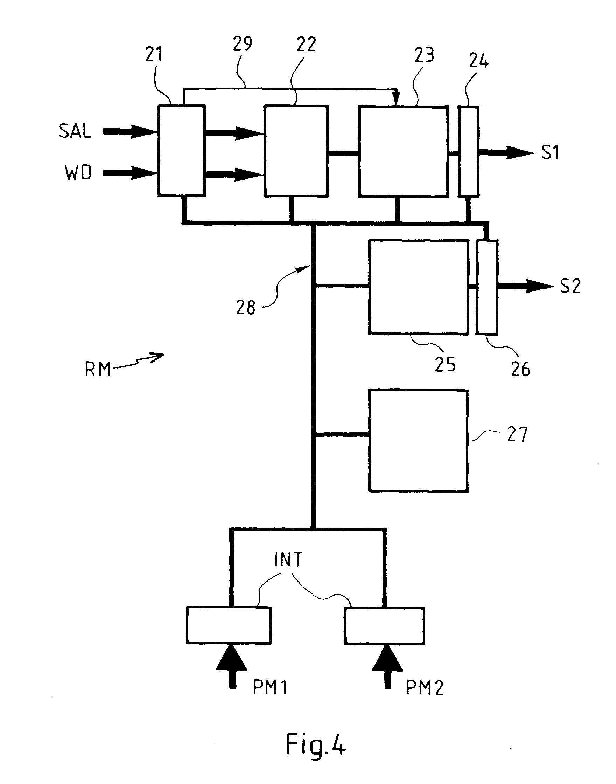

Le module de reconfiguration comporte divers registres et zones volatiles de stockage qui sont protégés contre les évènements aléatoires (par exemple grâce à un élément classique de détection et de correction d'erreur (en anglais "Detection and Correction Code" ce qui donne en abrégé EDAC) et contre des opérations d'écriture en provenance du module processeur actif, en cas de défaillance de celui-ci. Les registres et zones sont accessibles à la lecture et l'écriture par le module processeur PM conformément à des droits d'accès et des protocoles à la portée de l'homme de métier. Enfin ce module RM comporte une protection matérielle (par exemple grâce à une circuiterie matérielle parallèle représentée aux figures 4, 5 et 7 sous la référence 29) de manière à inhiber la génération en sortie d'un signal parasite de commande en reconfiguration en l'absence de signaux d'entrée.

Ainsi qu'il ressort de la figure 4, le module de reconfiguration est formé de plusieurs blocs fonctionnels entre lequels sont notamment répartis les registres et zones précités :
- un bloc d'autotest 21,
- un bloc 22 de détection et de validation d'alarme (donc pour les niveaux III et IV),
- un bloc 23 de reconfiguration de module processeur, relié au bloc 21 par la liaison parallèle 29 et auquel est connecté un bloc logique de vérification 24,
- un bloc 25 de reconfiguration de coupleurs, auquel est connecté un bloc logique de vérification 26,
- un bloc mémoire de sauvegarde 27, et
- un bus de liaison 28.

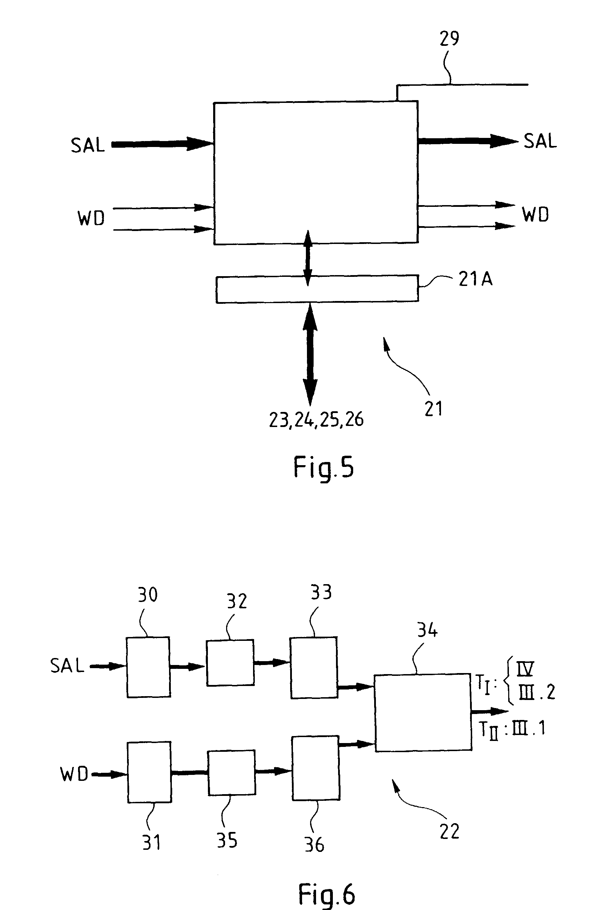

Le bloc d'autotest 21, situé à l'entrée du module de reconfiguration, est schématisé à la figure 5. Il a pour fonction de simuler tous les types possibles d'alarmes SAL ou WD qui peuvent provenir du système ou du chien de garde. Il comporte une logique capable de générer toutes les combinaisons fictives d'alarmes contenues dans un registre que comporte ce bloc. Le bloc reçoit d'éventuels signaux réels d'alarme de système (niveau IV) ou en provenance du chien de garde (niveau III) et fournit soit des signaux d'alarme fictive, soit ces signaux réels lorsqu'ils existent, ces signaux de sortie ayant les mêmes caractéristiques physiques, qu'ils correspondent à des alarmes réelles ou fictives; il échange par ailleurs des signaux avec le bloc 23 et les blocs logiques de vérification 24 et 26 (voir ci-dessous) au travers d'un interface repéré 21A et connecté au bus 28.

En cas de panne réelle, toutes les procédures de test sont interrompues, les interfaces INT entre le module de reconfiguration et les modules processeurs PM1 et PM2 sont inhibés, les valeurs nominales des divers blocs sont rechargées à partir du bloc-mémoire 27 (elles peuvent avoir été modifiées par une procédure de test) et le traitement nominal des alarmes est déclenché.

Le bloc 22 de détection et de validation d'alarme est schématisé à la figure 6.

Ce bloc comporte des registres 30 et 31 (ou tables de masquage) permettant de retenir ou rejeter toutes les combinaisons d'entrée d'alarmes de système ou de chien de garde (c'est ainsi, par exemple, qu'une perte du signal Terre, qui au cours d'une mission d'observation sera considéré comme un signal d'alarme-système, sera par contre à considérer comme normal en mode pointé Soleil). Une alarme de niveau IV sera validée si au moins l'une des entrées d'alarme système est activée. De même une alarme de niveau III sera validée si au moins l'une des entrées d'alarme de chien de garde est activée. En pratique, une telle alarme de chien de garde correspond au franchissement d'un seuil (en pratique nul) du signal de sortie du chien de garde qui, par exemple, normalement nul devient tout à coup positif d'un niveau donné.

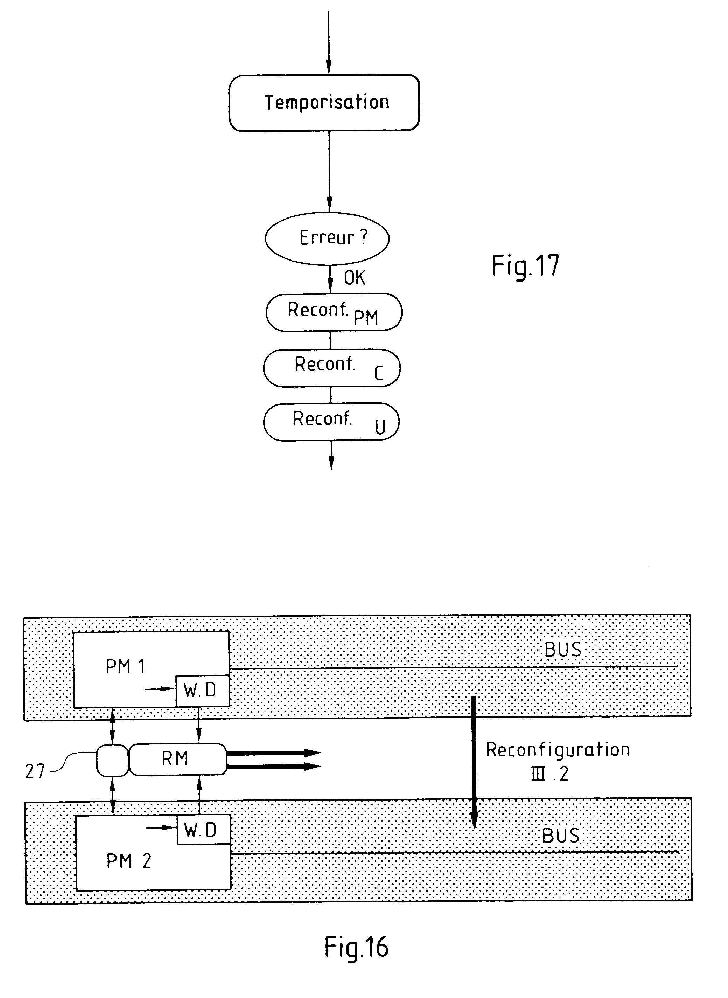

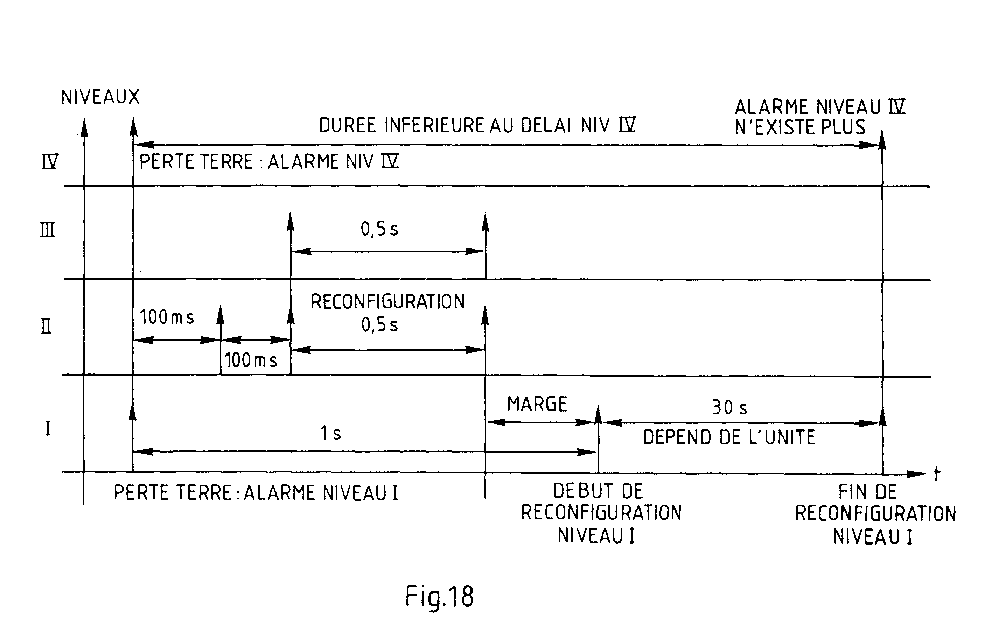

Selon un aspect avantageux de l'invention, un élément de temporisation 32 permet d'introduire un retard (voir ci-dessous, notamment à propos des figures 17 et 18) à un signal d'alarme de niveau IV. Ce retard peut être chargé par le module processeur PM : cette alarme de niveau IV doit alors subsister pendant au moins le temps défini par ce retard pour être prise en compte. Si cette condition est remplie, le signal d'alarme est stocké en 33 en tant qu'alarme valide de niveau IV (changement d'état d'un témoin) et envoyé au sélecteur de priorité 34.

En ce qui concerne les alarmes de chien de garde, une logique 35 de comptage et d'horloge est avantageusement prévue pour envoyer un premier type de signal d'alarme de niveau III (noté III.1) à la réception d une alarme de chien de garde puis, en cas de pluralité d'alarmes de chien de garde pendant une période déterminée à partir de la première alarme, envoyer un second type de signal d'alarme de niveau III (noté III.2). Ces signaux d'alarme, une fois générés/validés, sont stockés en 36 de manière à ce que le module processeur puisse identifier l'origine de l'alarme.

Le sélecteur 34 accorde la priorité au niveau IV : il génère deux types de signaux de sortie selon que :
- l'alarme est de type IV ou III.2 : sortie T_{I} de type I,
- l'alarme est de type III.1 : sortie T_{II} de type II.

Cette distinction entre les types d'alarme III.1 et III.2 est l'un des aspects originaux en soi de l'invention.

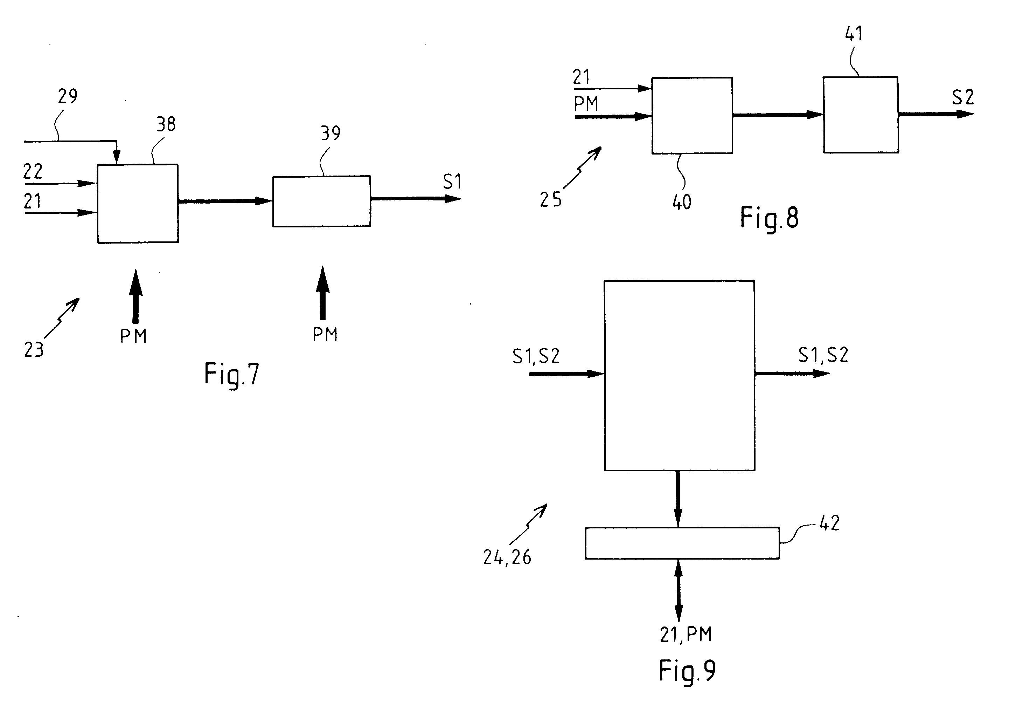

Le bloc 23 de reconfiguration du module processeur est schématisé à la figure 7. Il comporte un registre indiquant le module processeur (et le convertisseur de puissance associé) à utiliser en cas de reconfiguration : c'est le registre de reconfiguration processeur ; il comporte un sous-registre comportant des données fournies par le bloc 21, indiquant si le processus de reconfiguration en cours fait partie d une procédure de test (autant de cases qu'il y a de procédures de test) ou si c'est une reconfiguration réelle : cela conditionnera les signaux de sortie (voir ci-dessus).

Ce bloc comporte une partie logique 38 pouvant avoir deux type d'entrée dont l'une correspond aux deux types de sortie du bloc 22 de détection et de validation d'alarme :
- si il s'agit d'une entrée T_{I} correspondant à la sortie de type I (alarme de niveau IV ou III.2) la logique déclenche la génération d'une impulsion adaptée à commander un basculement vers le module processeur redondant (et le convertisseur de puissance associé) compte tenu du contenu du registre de reconfiguration processeur,
- s'il s'agit d'une entrée T_{II} correspondant à la sortie de type II (alarme de niveau III.1) la logique génère une impulsion adaptée à relancer (extinction et réallumage) le module-processeur utilisé jusque là.

Cette partie logique 38 reçoit comme autre entrée un signal du bloc 21 transitant en pratique par le bus 28, indiquant qu'il s'agit d'une procédure de test (et de quel type) ou d'une reconfiguration réelle. Elle reçoit enfin un éventuel signal d'inhibition par la ligne 29.

La reconfiguration, si elle doit être réelle, est effectuée par des éléments pilotes ("drivers" en anglais) 39 générant une impulsion de commande S1.

Chacun des éléments 38 ou 39 du bloc peut recevoir des informations du module processeur PM actif par le bus 28.

Le bloc 25 de reconfiguration de coupleurs est schématisé à la figure 8. Il est rappelé que ce bloc ne sert qu'à exécuter des opérations de reconfiguration déclenchées par le module processeur PM au travers du bus 28.

Le bloc 25 reçoit donc en entrée un signal de déclenchement provenant du module processeur, indiquant lequel des coupleurs doit être activé et lequel doit être désactivé. Un registre de test comportant des données en provenance du bloc 21 indique si cette reconfiguration fait partie d'une procédure de test ou d'une stratégie réelle de reconfiguration.

Ce bloc 25 comporte une (ou plusieurs) temporisation(s) 40 des éléments pilotes 41 générant des impulsions S2 pour effectuer la reconfiguration de coupleur.

Les blocs logiques de vérification 24 ou 26 sont tous deux conformes au schéma de la figure 9. Ces blocs logiques sont destinés à tester les impulsions de reconfiguration émises par les éléments pilotes 39 ou 41 des blocs 23 ou 25. Deux tests conduits par chacun de ces blocs 24 ou 26 portent par exemple respectivement sur la tension et la durée des impulsions (repérés test 1 et test 2) ; les valeurs obtenues sont stockées dans un registre 42 accessible au module processeur PM.

En pratique une opération de reconfiguration (y compris dans le cas III.1) est commandée par des relais qui ne changent d'état qu'à la réception d'une impulsion d'énergie suffisante. L'impulsion réelle de commande est, pour ce faire, calibrée à la fois en tension et en durée, tandis que les impulsions générées lors des procédures de test ont, selon le test à effectuer, le niveau voulu en tension (typiquement 26 V) mais pendant une durée très courte (test 1), ou un niveau de tension très faible (typiquement 3-4 V) pendant la durée voulue (typiquement 45 ms - test 2 -), c'est-à-dire qu'elles n'ont pas une énergie suffisante pour commander les relais.

Le bloc-mémoire de sauvegarde 27 est dédié au stockage de données dynamiques du système 1 ainsi que de modules de logiciels.

Ainsi des données et modules de logiciels corrects restent toujours disponibles même en cas de panne du module processeur ou du chien de garde, et aussi en cas de perte d'énergie.

Il y a un bloc-mémoire de sauvegarde par module de reconfiguration. Chaque module processeur aura la possibilité d'écrire et de lire le bloc-mémoire de sauvegarde en cours d'utilisation (sachant qu'il n'y a qu'un seul bloc-mémoire actif à un instant donné).

Il faut noter que l'utilisation optimale du principe d'un module de reconfiguration suppose l'existence de la procédure d'autotest (voir les commentaires ci-dessus concernant les blocs 21, 23 à 26), à défaut de quoi, en cas de panne de ce module, celle-ci ne sera pas détectée juqu'à ce qu'apparaisse le besoin d'une reconfiguration, lequel besoin ne sera pas satisfait. Dans ce cas, l'ensemble du système est en grand danger puisque la première panne ne sera pas surmontée. Bien sûr l'autotest ne peut pas être traité par le module de reconfiguration lui-même ; le traitement de cet autotest incombe au module processeur qui ne pourra toutefois que surveiller le déroulement d'un tel autotest et, au cas où il détecterait une anomalie, c'est-à-dire une panne du module de reconfiguration, en rendre compte au sol par télémétrie. Le module processeur n'a aucune possibilité d'agir sur le module de reconfiguration de sorte qu'aucun bouclage entre ces modules ne risque d'intervenir. Le sol, et le sol seulement, a la possibilité de commander un basculement sur le module de reconfiguration redondant, voire de déconnecter les deux modules de reconfiguration au vu des résultats des autotests et bien sûr au vu du comportement du satellite.

Il est important de noter que la mission et le comportement du satellite ne dépendent pas de la disponibilité ou non d'un module de reconfiguration en état de marche. Il reste en effet toujours possible de commander à partir du sol toutes les tâches nécessaires à la mission (notamment les opérations de reconfiguration) en l'absence de module de reconfiguration en état de marche. Il est vrai cependant que l'autonomie du satellite sera réduite en ce sens que la passivation automatique de panne et la reconfiguration automatique ne subsistent que pour le niveau I. Les autres niveaux doivent alors être pris en charge par le sol qui garde cependant la possibilité de réagir de façon automatique à la manière d'un troisième module de reconfiguration grâce aux modules classiques de commande de haute priorité (High Priority Commands Modules).

Ce qui précède peut être résumé comme suit :
- en cas de panne d'une ou plusieurs unité(s), celle-ci est détectée par le module processeur (par logiciel) ; la réaction est commandée par ce module processeur et exécutée (après temporisation) par le coupleur associé : une telle panne de niveau I ne provoque aucune interruption de mission ;
- en cas de panne d'un ou plusieurs coupleurs(s), celle-ci est détectée par le module processeur (par logiciel) ; la réaction est commandée (après temporisation) par le module processeur et exécutée par le module de reconfiguration : une telle panne de niveau II ne provoque aucune interruption de mission ;
- en cas de panne du module processeur ou du chien de garde, celle-ci est détectée par le chien de garde et le module de reconfiguration ; la réaction est commandée et exécutée par le module de reconfiguration et une telle panne de niveau III ne provoque aucune interruption de mission ;
- en cas de panne du système (panne non détectée ou non corrigée par les niveaux inférieurs), celle-ci est détectée par le module de reconfiguration grâce aux alarmes système transitant par les lignes 2A ; la réaction est, après temporisation, commandée et exécutée par le module de reconfiguration : une telle panne de niveau IV provoque une interruption de la mission mais après une réaction qui, commandée de façon automatique (et à bord), est de durée limitée (typiquement de l'ordre de quelques minutes) ; il appartient alors de décider de la suite ;
- en cas de panne du module de reconfiguration, celle-ci est détectée par le module processeur qui surveille les autotests et qui en informe le sol ; la réaction est commandée à partir du sol, de façon automatique ou humaine, sans interruption de la mission.

Les stratégies de reconfiguration pour les divers niveaux vont maintenant être développées.

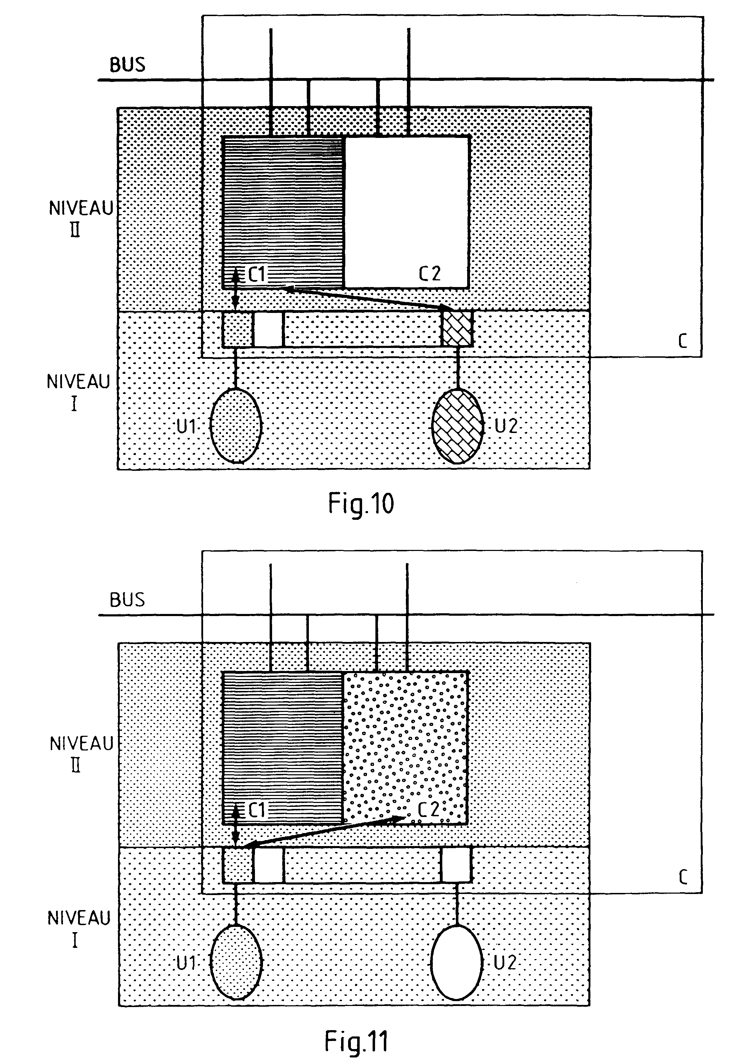

En ce qui concerne le niveau I, l'essentiel a déjà été dit. La décision et les actions (après temporisation) de reconfiguration d'une unité telle que U1 à la figure 10, sont prises par un logiciel d'application en fonction de paramètres caractéristiques de l'unité (ces paramètres sont par exemple des valeurs d'une tension secondaires existant au sein de l'unité). Ces actions de reconfiguration sont transmises par le module processeur par l'intermédiaire du bus 3 et à travers un coupleur (ici noté C avec sa partie active C1 et sa partie redondante C2) jusqu'à l'unité considérée. Le coupleur C1 se connecte alors à l'unité redondante U2 si celle-ci n'a pas encore été utilisée. L'ensemble des informations associées à ce couple d'unités U1 et U2 (quelle unité est en cours d'utilisation ? reste-t-il une unité disponible ? ...) est stocké et protégé dans le bloc-mémoire de sauvegarde 27. Dans tous les cas, la mission n'est pas interrompue.

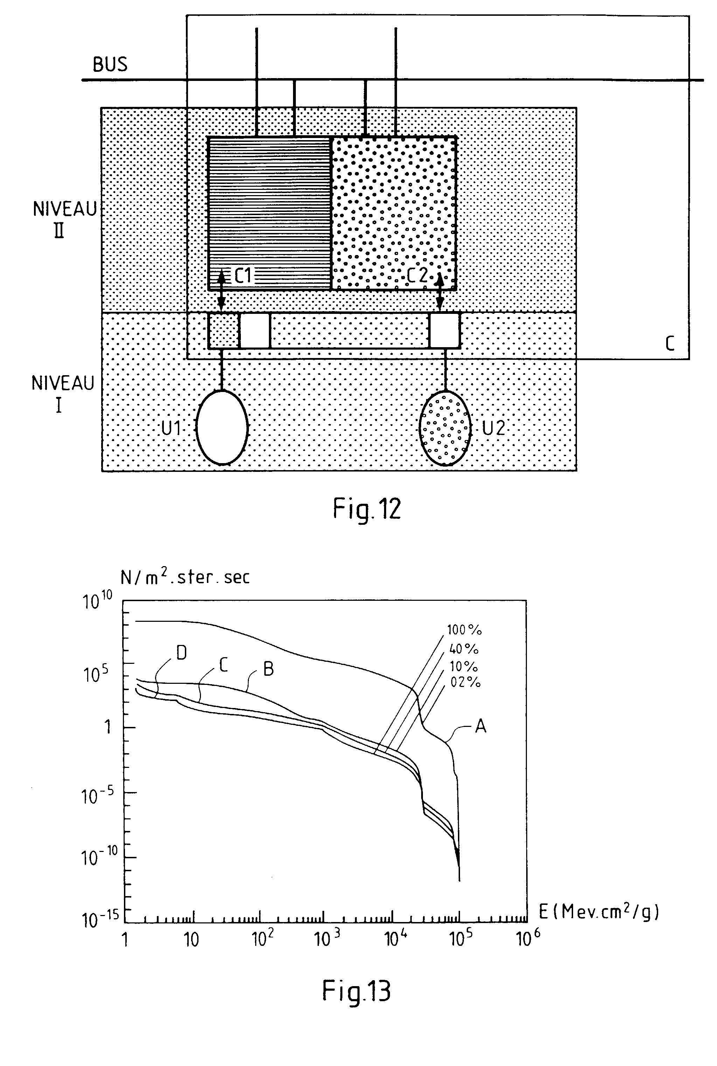

Pour ce qui est du niveau II (voir la figure 11) l'essentiel aussi a déjà été dit. La décision et le déclenchement d'une action de reconfiguration d'un coupleur tel que C sont commandés (après temporisation) par un logiciel d'application en fonction de paramètres caractéristiques dudit coupleur (par exemple résultat d'un test classique de décodage d'une fonction test du standard OBDH). L'exécution proprement dite de l'action de reconfiguration (passage de C1 à C2) est assurée par le module de reconfiguration. Cela s'explique par le fait que les coupleurs sont connectés au bus et cessent de ce fait d'être accessibles en cas de défaillance à l'interface des coupleurs avec ces bus. Une autre solution aurait pu consister à faire contrôler et commander chaque coupleur par un autre ; toutefois cette solution aurait eu notamment pour inconvénients une grande complexité et une ambiguité quant à la localisation d une panne une fois détectée. Seule une structure en chaîne des coupleurs aurait pu alors permettre de lever l'ambiguité, mais ce au prix d'une complexité encore plus grande tant du point de vue logiciel que du point de vue câblage.

On rappelle ici que pour le niveau II le rôle du module de reconfiguration se limite à un rôle "passif" de simple exécutant : il n'y a ni logique, ni action intelligente à ce propos au sein du module de reconfiguration. Le module n'agit que sur ordre du module processeur, lequel n'agit sur les éléments pilotes du module de reconfiguration que pour agir directement sur le coupleur considéré.

En fait, au sein d'un coupleur, l'action de reconfiguration peut affecter plus d'un module ; toutefois, quel que soit le nombre de ces modules, la stratégie de reconfiguration automatique à bord prévoît en principe de basculer sur tous les modules de secours disponibles. Comme pour le niveau I, le statut des modules des coupleurs (lesquels sont en cours d'utilisation ? et lesquels restent disponibles ? ...) est stocké et protégé dans le bloc-mémoire de sauvegarde 27.

Après reconfiguration, les anciens modules qui ont été déconnectés sont considérés comme n'étant plus disponibles jusqu'à ce que, éventuellement, le sol ait pu, grâce à des informations télémétrées, identifier les modules réellement défaillants et ait en conséquence modifié dans le bloc-mémoire le statut des modules reconnus non défaillants. Comme cela a déjà été indiqué, il n'y a pas d'interruption de mission.

La figure 12 montre un cas où des actions combinées de reconfiguration affectent les niveaux I et II (passage de C1-U1 à C2-U2).

Cette alternative à la solution de base permet de prendre en compte les cas où les signaux d'autotests ne permettraient pas de lever l'ambiguité entre les niveaux I et II ou que la reconfiguration de niveau I soit très longue.

Comme cela a déjà été exposé, le niveau III concerne le module processeur et ses périphériques, contrôlés par un chien de garde. Le but de ce niveau est de permettre une auto-restauration en cas de panne en préservant la mission, et ce en adaptant la réaction (reconfiguration ou autre) au type de défaillance de manière à tirer le meilleur parti possible des éléments de l'unité OBCU repérée 2 : en particulier, on essaye d'utiliser un même module processeur le plus longtemps possible.

Pour être capable d'adapter la réaction à la défaillance, il faut distinguer plusieurs types de défaillances ou de pannes :
- erreur transitoire de donnée,
- altération permanente de donnée,
- défaillance du matériel.

Un exemple typique d'erreur transitoire de donnée est le résultat d'une perturbation électrique, telle que décharge électrostatique ou autre perturbation électromagnétique, qui peut altérer quelques valeurs dans les bus (on suppose ici qu'il n'y a par contre pas d'altération de zones mémoires).

Un exemple typique d'altération permanente de donnée est une altération par un évènement isolé (en anglais "Single Event Upset") qui peut changer le contenu d'une zone mémoire voire changer complètement la substance d'une donnée, voire d'un logiciel dans son ensemble : les conséquences peuvent être catastrophiques.

Un exemple typique de défaillance de matériel est une défaillance du module processeur lui-même.

Diverses gradations de réactions sont prévues pour ces divers types de défaillances.

Pour le traitement des erreurs transitoires, on prévoit un filtrage temporel par logiciel qui passive automatiquement ce type d'erreur, en en évitant toute conséquence par exemple par stockage de données fausses. On a vu que le lieu privilégié de ce type d'erreurs est le bus 3 (du type OBDH) : le taux d'erreur est de 10⁻⁹ pour les réponses sur le bus ce qui, pour un débit maximum de 16.000 mots par seconde, correspond à une donnée erronée toutes les 17 heures en considérant un taux de chargement à 100 % (toutefois sans conséquence compte tenu de la passivation précitée).

Pour ce qui est des altérations permanentes de données, il a été indiqué qu'il s'agit le plus souvent d'altérations par un évènement isolé (principalement passage de particules telles qu'ions lourds), et le diagramme de la figure 13 corrèle la densité minimale de flux de particules d'énergie comprise entre 2 et 10⁵ McV.cm²/g rencontrées sur une orbite géosynchrone pour diverses fractions d'une quelconque période de temps.

La courbe supérieure, repérée A et associée à l'indication 0,02 %, représente ainsi la répartition en énergie et le flux de densité des particules susceptibles de provoquer des altérations pendant les 99,98 % du temps les plus favorables : pendant les 0,02 % restants (globalement une journée sur une mission de 15 ans) les particules sont en effet plus nombreuses et plus dangereuses.

La courbe inférieure, repérée D et associée à l'indication 100 %, correspond par contre au minimum d'agression qu'il est possible de subir en un instant quelconque.

La courbe repérée B et associée à l'indication 10 % correspond au régime d'agression valable pendant les 90 % du temps les plus favorables. En moyenne, la courbe A est décalée vers le haut d'un rapport d'environ 350.000 par rapport à la courbe B . En d'autres termes, pendant 9,98 % du temps les agressions dont le spectre est donné par la courbe A, sont en moyenne 350.000 fois plus graves que pendant les 90 % les plus favorables.

La passivation de panne est effectuée selon une démarche à trois volets : pour la régime d'agression valable 90 % du temps, pour le régime valable entre 90 et 99,98 % du temps et pendant les 0,02 % du temps restant.

Pour ce qui est des 90 % du temps, la passivation est effectuée par la technologie elle-même. Pour ce faire, la technologie choisie pour les microprocesseurs et les mémoires est la technologie CMOS/SOS. Pour ce type de technologie, en tenant compte de la courbe B (à 90 %), le taux total de défaillance par puce (circuit intégré) faisant partie de l'OBCU pour l'ensemble d'une mission de 15 ans est de l'ordre de 5.10⁻³. En d'autres termes, pendant 90 % du temps, le choix approprié de la technologie élimine le risque d'une altération permanente de point mémoire dans le microprocesseur ou dans les mémoires.

Pendant environ un dixième du temps (9,98 % entre 90 % et 99,98 %), les risques d'altération sont 350.000 fois plus grands, ce qui correspond à un risque d'environ un évènement par mois.

En ce qui concerne les mémoires, ces altérations par évènement isolé sont passivées par un mécanisme classique de type EDAC (initiales de Error Detection And Correction Code en anglais) capable de détecter et corriger toute erreur unique et de détecter toute erreur double. Compte tenu de la faible fréquence de ces erreurs et de la fréquence de l'EDAC (typiquement de l'ordre de la minute), il n'y a aucun problème pour rafraîchir ensuite les données à partir du bloc 27.

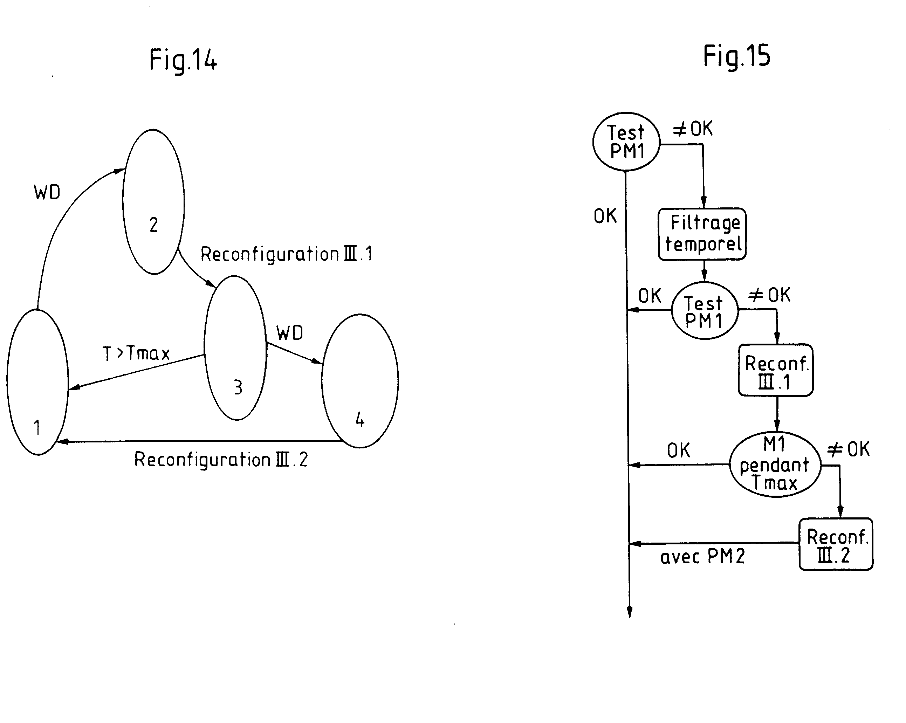

En ce qui concerne le microprocesseur, les altérations par évènement isolé sont traitées grâce au chien de garde et au bloc logique 22 de détection et de validation d'alarme (voir figure 6) que comporte le module de reconfiguration. En effet, une altération du microprocesseur induisant une défaillance catastrophique des données contenues dans le microprocesseur (détectable par le chien de garde généralisé) entraîne l'envoi d'un signal d'alarme par le chien de garde au module de reconfiguration. Ce dernier réagit comme suit (voir la figure 14 où le module processeur, initialement à l'état sain repéré 1 passe à l'état 2 suite au signal d'alarme WD) : le compteur du module 35 de la figure 6 est déclenché s'il s'agit d'une première alarme tandis qu'une reconfiguration de type III.1 est déclenchée, c'est-à-dire que le module logique 38 de la figure 7 provoque le relancement (extinction/allumage) du même module processeur PM en rafraîchissant les mémoires, par le contenu de la mémoire ROM de ce PM (cette mémoire ROM reste intacte à moins d'une panne matériellevoir ci-dessous) pour ce qui est du code et par le contenu du bloc-mémoire de sauvegarde 27 en ce qui concerne les données critiques nécessaires à ce relancement et ce, sans interruption de la mission.

Puisque le type de défaillance considéré ici est de type altération de donnée, on sait que ce relancement, grâce au rafraîchissement des mémoires, sera couronné de succès et que l'état 3 obtenu après la reconfiguration de type III.1 restera durablement sain, au delà de la durée de comptage Tmax du module 35 de la figure 6 : on revient à l'état sain 1 de départ.

Si l'on considère maintenant les 0,02 % de temps restants (ce qui correspond à une durée d'un jour au cours de toute la mission), aucune quantification n'est disponible quant à l'amplitude ou la répartition statistique des rafales ou tempêtes de particules ou dessus de la courbe A. Le seul moyen pour minimiser l'effet d'une telle "tempête" est de minimiser la temporisation effectuée par le module 35 de la figure 6 qui sert à distinguer entre les niveaux III.1 et III.2 de défaillance. Plus courte est cette temporisation, meilleure est l'aptitude du système à faire face à une telle tempête (qui rappelons-le n'induit que des altérations de données). Toutefois, à l'inverse, cette temporisation ne peut descendre en-dessous d'un seuil dicté par la constante de temps des défaillances matérielles (au risque de conduire à une série infinie de reconfigurations de type III.1 en cas de panne matérielle) et par le temps minimum nécessaire pour passer d'un module processeur à un autre lors d'une reconfiguration de type III.2.

Une temporisation Tmax de l'ordre de dix secondes est par exemple choisie. On appréciera qu'une telle temporisation est très courte par rapport au temps (plusieurs heures le plus souvent) qu'il fallait en pratique dans des stratégies fondées sur des décisions prises au sol.

S'agissant maintenant des pannes matérielles, on a vu qu'elles pouvaient par exemple correspondre à la panne définitive du module processeur (le problème d'une panne de type court circuit interne dans un quelconque circuit intégré au calculateur, dû au passage d'un ion lourd ("latch up" en anglais) est en fait éliminé par le choix de la technologie CMOS/SOS). D'autres types de pannes sont toutefois possibles, telle que perte de puissance ou perte d'horloge notamment. Le niveau III.2 a été pris en considération pour tenir compte de tels types de disfonctionnements.

On a vu que ce type d'alarme est déclenché par le même signal d'alarme envoyé par le chien de garde que le type III.1. La discrimination résulte de la présence conjuguée des fonctions compteur et horloge dans le module 35 du bloc 22 de détection et de validation. En effet, ce type III.2 correspond à la détection, pendant la temporisation précitée, d'un nombre d'alarmes supérieur à une valeur de seuil, ici prise égale à 1. Ainsi, si pendant cette temporisation, après qu'une reconfiguration de type III.1 ait été tentée, une seconde alarme est détectée, on déduit qu'un relancement du module processeur avec rafraîchissement des mémoires n'a pas suffi à faire disparaître la cause d'alarme (état 4 de panne permanente à la figure 14), et donc que celle-ci n'est pas une altération de donnée, mais une panne matérielle : une reconfiguration de type III.2 est alors décidée avec remise à zéro de l'ensemble du module 35 de la figure 6.

La figure 15 représente sous forme d'organigramme les enseignements de la figure 14, avec les divers tests précité, avec pour commencer un filtrage temporel destiné à éliminer les alarmes parasites.

Cette reconfiguration de type III.2 est schématisée à la figure 16 ; elle correspond à la déconnexion du module processeur PM1 utilisé jusqu'alors (ainsi que de son convertisseur de puissance - non représenté -) et à l'activation du module processeur PM2 restant (et du convertisseur associé - non représenté -). L'existence ou non d'un tel module processeur disponible apparaît dans des données stockées dans le bloc 23 du module de reconfiguration ; bien entendu aucun basculement n'est possible s'il ne reste plus de module processeur disponible.

Si cette reconfiguration de type III.2 est possible on revient à l'état sain de départ 1 de la figure 14. Sinon c'est au sol de décider comment réagir.

Un autre type de défaillance de niveau III concerne les bus.

Si la fiabilité du matériel permet d'éliminer le couplage croisé entre les modules processeurs et les bus OBDH comme cela a été le cas jusqu'à présent, alors on suit une procédure de test de bus ; celle-ci fait partie du chien de garde généralisé puisque en cas de défaillance aussi bien le module processeur utilisé que le bus utilisé sont à changer. Cette procédure est une synthèse des tests de niveau II ; en d'autres termes, si tous les tests de coupleurs concluent à la défaillance de tous les coupleurs (par exemple une défaillance simultanée des cinq coupleurs de la figure 1 malgré un filtrage temporel), ou dans le cas d'une erreur de niveau II persistante après passage sur le coupleur redondant approprié, alors la conclusion doit être que tous les coupleurs sont a priori bons mais que c'est le bus qui est défaillant : une alarme de niveau III.1 est alors envoyée pour commencer.

Le but du niveau IV est d'être un niveau de sureté pour l'ensemble du système. En fait, toutes les pannes détectables sont sensées avoir été traitées par les niveaux inférieurs : les alarmes et les actions à entreprendre en ce niveau IV concernent donc tout le système.

Les signaux d'alarme-système SAL pris en considération sont générés à partir de la vérification ou non de divers critères ; ces divers critères doivent en principe être vérifiés en cas de satellite en bonne santé, et ces critères sont autant que possible en nombre et en nature tels que leur vérification signifie, avec une forte probabilité, que le satellite est en bonne santé. Ces critères sont ici définis par rapport à des références externes et, en cas de non-respect d'au moins l'un d'entre eux (par exemple perte de la Terre, et/ou du Soleil et/ou de l'Etoile Polaire ...) des signaux SAL sont émis, qui sont envoyés au module de reconfiguration par les lignes 2A. D'autres critères peuvent être pris en considération par la génération des signaux SAL, concernant par exemple le régime d'alimentation électrique de tout ou partie du satellite, le régime thermique de tel ou tel élément ... Il est fréquent, mais pas systématique, que la génération d'un signal SAL s'accompagne de la génération d'un signal de niveau I, voire II ou III (par exemple présomption de défaillance du capteur Terre en cas de perte Terre ...).

Lorsqu'une alarme de niveau IV est émise et qu'elle est détectée par le module de reconfiguration, elle n'est pas immédiatement traitée (voir le schéma de la figure 17). De manière à laisser un temps suffisant aux autres niveaux pour effectuer leurs tâches et donc vérifier qu'une réaction de niveau inférieur (I, II, III) ne suffit pas, une temporisation est en effet introduite ; cette temporisation est plus grande que le délai maximum nécessaire à l'opération de configuration la plus longue susceptible d'être en cours d'exécution à un niveau inférieur. En outre, cette temporisation est choisie en accord avec la stratégie de contrôle d'attitude et d'orbite de manière à ce que, même en cas de perte des paramètres systèmes, il reste suffisamment de temps pour essayer une nouvelle acquisition. Cette temporisation à l'entrée du niveau IV est typiquement de l'ordre de quelques minutes (voire quelques dizaines de secondes).

Si au terme de cette temporisation l'alarme persiste, on commande son traitement. Un témoin ("flag" en anglais), indiquant que l'alarme est de niveau IV, est active au sein du module 33 (voir la figure 6). Le module processeur et le convertisseur de puissance associé sont changés comme dans le cas du niveau III.2 puis on teste le témoin indiquant le niveau de l'alarme. Si le témoin est dans un état correspondant à l'état IV, alors on commande par logiciel une reconfiguration de tous les coupleurs et enfin de toutes les unités (ou du moins les coupleurs ou unités pour lesquels existent des modules recondants disponibles). En d'autres termes, on reconfigure tout ce qui peut l'être.

Dans ce cas, la mission est temporairement interrompue dans l'attente d'une action à partir du sol mais le satellite reste dans un mode de sécurité ("safe mode").

De manière à garder les niveaux indépendants et éviter une interaction entre eux, l'invention propose, selon l'un de ses aspects originaux en soi, une logique de distinction ou discrimination temporelle.

La première idée qui vient à l'esprit à propos d'une panne dans un ensemble amène en fait à chercher à déduire l'élément défaillant en tirant parti des divers paramètres d'autotest. Mais cette solution nécessite un logiciel complexe, avec certaines ambiguités sur l'origine de la panne ayant fait sortir les paramètres de test en dehors de leurs limites normales (cela est inévitable en l'absence de relations bi-univoques entre les pannes et les paramètres d'autotest).

La solution de distinction temporelle recommandée par l'invention est une stratégie à base de temporisations différentes pour les divers niveaux du système hiérarchisé : depuis le niveau I le moins critique jusqu'au niveau III le plus critique. L'idée de base est de donner suffisamment de temps à chaque niveau III et II, avant de laisser se déclencher les procédures correspondant aux niveaux inférieurs ; le niveau IV par contre, qui traite conjointement de tous les niveaux inférieurs, est affecté d'une temporisation supérieure a la durée du cycle de réaction du niveau le plus faible.

Ainsi par exemple dans le cas de la perte du bus 3 (quelle qu'en soit la cause), toutes les unités et tous les coupleurs vont paraître à tort défaillants, avec apparition d'alarmes de niveaux III, II et I.

La stratégie de distinction temporelle consiste à ne laisser se dérouler des reconfigurations de coupleurs qu'après qu'une éventuelle reconfiguration de niveau supérieur III (III.1 ou III.2) ait eu lieu et ait pu corriger la panne à ce niveau si cela se peut, puis à ne laisser se dérouler de reconfiguration d'unités qu'après que d'éventuelles reconfigurations des coupleurs aient pu avoir lieu et aient pu corriger les éventuelles pannes au niveau II.

C'est ainsi que dans l'exemple précité d'un bus défaillant, après la reconfiguration du bus, les paramètres de test reviennent dans leurs plages nominales, sans qu'aucune autre reconfiguration à un niveau inférieur soit nécessaire.

Le chronogramme de la figure 18 (l'échelle des temps n'est pas respectée pour des raisons de clarté) illustre un autre cas, celui d'une panne du détecteur terrestre actif. Via le coupleur associé et le bus 3, le module processeur PM détecte cette panne et la traite en tant que panne de niveau I. Par ailleurs, la perte du signal Terre provoque un signal d'alarme système de niveau IV, transitant par une ligne 2A.

Soit tₒ l'instant où ces deux alarmes apparaissent. Le module processeur déclenche la temporisation de niveau I tandis que l'horloge 32 du module de reconfiguration déclenche la temporisation de niveau IV : cela signifie qu'aucune réaction à l'une ou l'autre de ces alarmes ne va intervenir avant la fin de la temporisation.

Le traitement de chacune de ces alarmes est effectué sans savoir s'il y a ou non une quelconque autre alarme. On raisonne ci-dessous en respectant les règles principales suivantes :
- toute alarme de niveau III ou II provoque une inhibition des alarmes de niveau inférieur (on a vu en effet qu'à ces niveaux une alarme est accompagnée d'alarmes associées aux composants dépendants du composant fautif) ;
- on n'exécute la réaction à une alarme de niveau II ou I qu'après avoir laissé le temps à une éventuelle réaction de niveau supérieur (III ou II) de produire ses effets.

La période de scrutation de l'état des divers composants est supposée être ici de 100 ms.

C'est ainsi qu'une éventuelle panne de niveau III apparaissant à l'instant tₒ serait détectée dans le cycle suivant (tₒ + 100 ms). On prévoît ici un filtrage temporal d'un cycle (voire de plusieurs) : si l'alarme de niveau III persistait à tₒ + 200 ms, alors cette alarme serait validée et on déclencherait une reconfiguration de niveau III.1 après une éventuelle temporisation, ici nulle. On peut estimer qu'après validation d'une alarme de niveau III la génération d'un signal d'extinction puis la phase d'extinction du module processeur actif durent conjointement 200 à 300 ms. En conséquence, dans l'exemple considéré et dans l'hypothèse d'une alarme de niveau III, il y aurait extinction à tₒ + 500 ms. Cette extinction inhiberait tout traitement d'alarme de niveau I ou Il. Il faut donc prévoir pour le niveau II une temporisation telle qu'aucune réaction de niveau II puisse être déclenchée avant tₒ + 500 ms.

S'il apparaissait une alarme de niveau II à l'instant tₒ, elle serait détectée lors du cycle de scrutation suivant (à tₒ + 100 ms) et serait, en appliquant ici aussi un filtrage temporel de 100 ms, validée à tₒ + 200 ms. Une temporisation de 300 ms (voire plus) suffit à garantir la condition découlant de l'analyse faite ci-dessus du traitement de niveau III. Par précaution, on choisit ici une temporisation de 0,5 s ce qui amène, dans l'hypothèse d'une alarme de niveau II à tₒ + 0,7 s ; le traitement de cette alarme de niveau serait accompagné d'une inhibition de l'alarme de niveau I. Il faut donc prévoir pour le niveau I une temporisation d'au moins 0,7 s pour garantir qu'aucune réaction de niveau I n'est déclenchée avant le déclenchement d'une réaction de niveau II.

Par précaution, on prend ici une temporisation de 1 seconde.

Dans l'exemple considéré à propos de la figure 18, il n'y a pas eu d'alarme de niveau III ou II et l'alarme I persiste au terme de cette temporisation de 1 seconde : la reconfiguration du détecteur Terre est donc exécutée ; elle dure de l'ordre de 30 secondes (cette durée varie selon les unités) ce qui amène à Tₒ + 31 secondes.

Dans l'exemple considéré ici, la temporisation associée au niveau IV est d'une minute. Comme le traitement de l'alarme de niveau I a duré 31 secondes et que le nouveau détecteur Terre actif (supposé fonctionner correctement) fournit à nouveau des signaux valables, l'alarme de niveau IV disparaît avant le terme de la temporisation de niveau IV, et aucune réaction de niveau IV n'apparaît nécessaire. Le système est revenu à un état sain sans alarme.

Tout ce qui précède suppose l'existence d'un détecteur Terre redondant disponible, à défaut de quoi c'est au sol de décider comment continuer la mission.

On appréciera que la temporisation avant d'autoriser à un niveau donné une demande de reconfiguration est d'autant plus courte que le niveau est élevé : 1 s pour le niveau I, 0,5 s pour le niveau II, 0 ms pour le niveau III. Le raisonnement qui précède permet aisément de déterminer de nouvelles valeurs si par exemple on veut prolonger le filtrage temporel à 200 ms, voire plus.

En fait, un dernier niveau de réaction est assuré directement par l'opérateur au sol, en inhibant tous les modules de reconfiguration. Le sol a alors la possibilité d'assumer toutes les tâches effectuées jusque là à bord de façon automatique grâce aux télécommandes directes qui peuvent alors remplacer les éléments pilotes ("drivers") des modules de reconfiguration. Ainsi, en cas de défaillance des deux modules de reconfiguration, la mission nominale est préservée avec le traitement du niveau I assuré à bord et le traitement des niveaux supérieurs assurés par le sol.

On appréciera que l'invention propose un système centralisé très fiable quoique de masse et de coûts modérés, adapté à gérer aussi bien les aspects thermiques et énergétiques du satellite que le contrôle d'attitude et d'orbite.

Ainsi que cela a été développé ci-dessus, ce système centralisé comporte plusieurs originalités éventuellement indépendantes :
- il a été reconnu qu'un grand nombre de pannes de niveau III (niveau module processeur, voir bus) ne sont pas matérielles ; c'est pourquoi une première étape de reconfiguration consiste à relancer le même module processeur que celui qui a été utilisé jusque là. Cela va à l'encontre des habitudes de l'homme de métier qui consistent à agir en cas de panne et d'analyser ensuite les signaux d'alarme alors que l'invention est fondée sur une sorte de mise en doute de la gravité de la panne détectée en introduisant une sorte d'hésitation ou réticence à réagir. Ce concept peut se généraliser à tout type de système de gestion de données du type autonome et à réponse rapide dans lequel on veut tirer un parti maximum de chaque calculateur (éventuellement unique),
- la stratégie de distinction (ou discrimination) temporelle assurant un traitement successif des divers niveaux I, II, III, en partant du niveau le plus critique et en continuant ensuite vers les niveaux moins critiques et en inhibant à chaque fois les demandes de reconfiguration des niveaux inférieurs, assure une bonne indépendance entre les niveaux, sans faire intervenir aucune logique complexe et coûteuse de détection de l'origine de la panne. Cette stratégie de distinction temporelle permet pourtant de localiser et reconfigurer aisément un élément en panne dans une quelconque structure de concentration de données où un niveau n concentre des données en provenance du niveau inférieur n-1 pour les transmettre au niveau n+1. Pour chaque niveau, cette stratégie enseigne de prendre en compte périodiquement des paramètres caractéristiques de ce niveau (cycle de scrutation typiquement toutes les 100 ms) et de décider en fonction de ceux-ci si l'élément concerné est ou apparaît en panne : si cet élément est ou apparaît en panne une reconfiguration de ce niveau est provoquée, pour au moins les niveaux les plus élevés, par un module de reconfiguration ou de supervision. Ce module (voire le module processeur pour les niveaux les plus bas) teste périodiquement toutes les demandes de reconfiguration et si une telle demande est détectée, une temporisation est déclenchée, dont la valeur limite dépend du niveau considéré (d'autant plus courte que le niveau de panne est critique), la reconfiguration de ce niveau n'ayant lieu (avec inhibition des demandes de reconfiguration des niveaux inférieurs) qu'en cas de persistance de la demande de reconfiguration au delà de cette temporisation,
- le système utilise avantageusement (voir la figure 1) des paramètres internes (régime électrique, thermique ...) ou des paramètres inertiels externes au satellite, sélectionnables à bord de façon autonome en fonction des phases de la mission ou bien de façon figée à la conception, mais dont les sources sont reliées directement au module de reconfiguration sans aucun interface ni aucun intermédiaire de transport d'informations autre que des liaisons directes électriques ou radioélectriques ou optiques (repérées 2A à la figure 1),
- la système centralisé est à simple redondance interne, avec un module de reconfiguration adapté à agir de façon autonome sur les modules processeurs, et sur le niveau inférieur à l'initiative de ces modules processeurs ; ce module de reconfiguration est muni d'un bloc d'autotest et est surveillé par les modules processeurs sans posibilité d'action directe par ces derniers, grâce à quoi tout risque de bouclage est évité ; ce module de reconfiguration comporte en outre un bloc-mémoire de sauvegarde permettant de rafraîchir à volonté toutes les zones mémoire des modules processeurs.

Il va de soi que la description qui précède n'a été proposée qu'à titre d'exemple non limitatif et que de nombreuses variantes peuvent être proposées par l'homme de l'art sans sortir du cadre de l'invention. C'est ainsi notamment que le nombre de niveaux indépendants peut être augmenté au delà de trois tout en respectant les règles précitées de discrimination temporelle.

De même, cette invention peut se généraliser, outre le domaine spatial, à tout système de traitement de données devant offrir une autonomie importante en cas de pannes dans un milieu hostile tel que l'environnement nucléaire ou les systèmes isolés (par exemple un sous-marin).

## Revendications

1. Procédé de détection et de passivation de pannes dans un système centralisé hiérarchisé de traitement de données autonome en cas de pannes dans un environnement hostile notamment, mais pas nécessairement, embarqué à bord d'un véhicule spatial, comportant un module processeur (PM, PM1, PM2), un bus de traitement de données (3, 3') connecté à ce module processeur et des unités (4-8) connectées à ce bus et caractérisé en ce qu'on surveille des signaux d'état représentatifs du fonctionnement, bon ou mauvais, du module processeur et de chacune des unités et, lorsque l'on détecte un signal d'état représentatif d'un mauvais fonctionnement du module processeur, on commande un cycle prédéterminé de reconfiguration de module processeur (III.1) et, lorsque l'on détecte un signal représentatif d'un mauvais fonctionnement d'une unité, on commande le remplacement (II) de cette unité (C1) par une unité disponible pour la même fonction en redondance froide, après une temporisation au moins égale à la durée d'un tel cycle de reconfiguration de module processeur, cette temporisation étant inhibée lors du déclenchement d'un tel cycle de reconfiguration de module processeur.

2. Procédé selon la revendication 1, caractérisé en ce qu'on fait surveiller les signaux d'état représentatifs du fonctionnement des unités par le module processeur, et on fait exécuter un tel remplacement d'unité par un pilote (41) extérieur au module processeur.

3. Procédé selon la revendication 1 ou la revendication 2, caractérisé en ce que cette temporisation est comprise entre 0,5 et 50 secondes.

4. Procédé selon la revendication 3, caractérisé en ce que cette temporisation est comprise entre 0,5 et 5 secondes.

5. Procédé selon l'une quelconque des revendications 1 à 4, caractérisé en ce qu'on fait surveiller en outre par le module processeur des signaux d'état représentatifs du bon ou mauvais fonctionnement d'unités élémentaires connectées au bus par lesdites unités et, lorsque le module processeur (PM) détecte un signal d'état représentatif d'un mauvais fonctionnement de l'une de ces unités élémentaires, on fait exécuter par ce module processeur le remplacement de cette unité élémentaire par une unité élémentaire disponible pour la même fonction en redondance froide après une seconde temporisation au moins égale à la somme de la temporisation prévue avant le remplacement d'une unité par une unité disponible en redondance froide et de la durée nécessaire à ce remplacement, cette seconde temporisation étant inhibée par un tel remplacement d'unité, ou par le déclenchement d'un cycle de reconfiguration de module processeur (III.1).

6. Procédé selon la revendication 5, caractérisé en ce cette seconde temporisation est comprise entre 1 et 10 secondes.

7. Procédé selon la revendication 6, caractérisé en ce que la première temporisation étant de 0,5 seconde environ, cette seconde temporisation est de 1 seconde environ.

8. Procédé selon l'une quelconque des revendications 1 à 7, caractérisé en ce que, au module processeur étant connectées une pluralité d'unités réparties sur au moins un niveau, on surveille en outre, indépendamment desdites unités et du module processeur, des signaux d'état (SAL) représentatifs de l'état ou de l'attitude du véhicule spatial et, lorsque l'on détecte que l'un de ces signaux d'état franchit une valeur de seuil, on fait exécuter, indépendamment du module processeur, le remplacement du module processeur, du bus et toutes les unités par d'éventuels modules processeurs, bus et unités disponibles en redondance froide, et ce après une temporisation globale au moins égale au temps nécessaire pour effectuer successivement le remplacement du module processeur, puis celui des unités niveau par niveau en partant du niveau le plus élevé.

9. Procédé selon la revendication 8, caractérisé en ce que cette temporisation globale est d'au moins une minute.

10. Procédé selon la revendication 9, caractérisé en ce que cette temporisation globale est comprise entre 1 et 10 minutes.

11. Procédé selon la revendication 10, caractérisé en ce que ce nombre seuil est égal à 1.

12. Procédé selon la revendication 10 ou la revendication 11, caractérisé en ce que cette durée prédéterminée est comprise entre 5 et 60 secondes.

13. Procédé selon la revendication 13, caractérisé en ce que cette durée prédéterminée est de 10 secondes environ.

14. Procédé selon l'une quelconque des revendications 1 à 13, caractérisé en ce que, pour effectuer un tel cycle de reconfiguration de module processeur ou un remplacement d'unité, on commande la génération (39) d'une impulsion de reconfiguration de caractéristiques données, et en ce que pendant que les signaux d'état sont représentatifs d'un bon fonctionnement, on commande la génération d'au moins une impulsion de test ayant l'une seulement de ces caractéristiques données, et on vérifie que cette impulsion de test a celle, visée, des caractéristiques données.

15. Procédé selon la revendication 14, caractérisé en ce que lesdites caractéristiques données sont la tension et la durée de l'impulsion de reconfiguration.

16. Procédé de détection et de passivation de pannes dans un système centralisé hiérarchisé de traitement de données devant présenter une grande autonomie en cas de panne dans un environnement hostile notamment, mais pas nécessairement, embarqué à bord d'un véhicule spatial, comportant des composants (PM, 4-8) répartis sur plusieurs niveaux (I, II, III) dont un module processeur (PM, PM1, PM2) sur le niveau le plus élevé (III), caractérisé en ce qu'on surveille des signaux d'état représentatifs du fonctionnement, bon ou mauvais, de ces composants et, lorsque l'on détecte un signal d'état représentatif d'un mauvais fonctionnement du module processeur, on commande un cycle prédéterminé de reconfiguration de module processeur (III.1) et, lorsque l'on détecte un signal représentatif du mauvais fonctionnement d'un composant à un niveau inférieur, on remplace ce composant par un autre composant de même niveau disponible pour la même fonction en redondance froide, après une temporisation d'autant plus longue que le niveau de ce composant est bas, cette temporisation étant prédéterminée pour ce niveau en sorte d'être supérieure à la somme d'une temporisation prédéterminée choisie pour le niveau immédiatement supérieur et de la durée du remplacement d'un composant de ce niveau immédiatement supérieur, la temporisation prédéterminée choisie pour le niveau immédiatement inférieur à celui du module processeur étant au moins égale à la durée d'un tel cycle de reconfiguration de module processeur, toute temporisation déclenchée pour un composant d'un niveau donné étant inhibée par le déclenchement à un niveau supérieur soit d'un cycle de reconfiguration du module processeur, soit d'un cycle de remplacement d'un composant dont dépend ce composant donné.

17. Procédé selon l'une quelconque des revendications 1 à 16, caractérisé en ce que ce cycle prédéterminé de reconfiguration de module processeur comporte une extinction et un rallumage de ce module processeur.

18. Procédé selon la revendication 17, caractérisé en ce qu'on déclenche une horloge (35) lors du déclenchement d'un cycle de reconfiguration de module processeur et on compte (35) le nombre de fois où, au cours d'une durée prédéterminée à compter de ce déclenchement, on détecte un signal d'état représentatif d'un mauvais fonctionnement du module processeur (WD), on compare ce nombre à un nombre seuil et, si ce nombre atteint ce nombre-seuil, on commande le remplacement (III.2) de ce module processeur (PM1) par un autre module processeur disponible en redondance froide.

19. Système centralisé hiérarchisé de traitement de données autonome en cas de pannes dans un environnement hostile notamment, mais pas nécessairement, embarqué à bord d'un véhicule spatial, comportant une unité de calcul (2) et des unités (C) réparties sur un niveau inférieur (II) et connectés à un module processeur (PM, PM1, PM2) faisant partie de l'unité de calcul, caractérisé en ce que l'unité de calcul est conçue en sorte de surveiller des signaux d'état représentatifs du fonctionnement, bon ou mauvais, du module processeur et de chacune des unités et comporte en outre un module de reconfiguration (RM) séparé du module processeur, comportant, reliés à un bus de transfert de données (28), un bloc de reconfiguration de module processeur (23) adapté à émettre en fonction des signaux d'état une impulsion destinée à déclencher un cycle de reconfiguration de module processeur, un bloc d'autotest (21), un bloc de vérification de test (24) connecté à la sortie du bloc de reconfiguration de module processeur, un bloc-mémoire de sauvegarde (27), un module d'interface avec le module processeur (INT), et un second bloc de reconfiguration (25) connecté audit bus et adapté à générer, sur commande du module processeur en fonction des signaux d'état, une impulsion de reconfiguration destinée à l'une des unités dudit niveau inférieur, après une temporisation au moins égale à la durée d'un tel cycle de reconfiguration de module processeur.

20. Système selon la revendication 19, caractérisé en ce que le module processeur comporte une borne de commande marche/arrêt reliée à une sortie du bloc de reconfiguration de module processeur, et ce module de reconfiguration ayant une borne de commande marche/arrêt connectée à un module indépendant du module processeur.

21. Système selon la revendication 19 ou la revendication 20, caractérisé en ce que cette unité de calcul comporte un second module processeur (PM2) disponible en redondance froide et un second module de reconfiguration en redondance froide.

22. Système selon l'une quelconque des revendications 19 à 21, caractérisé en ce que ce module de reconfiguration est en outre connecté par des lignes (2A) indépendantes des unités, du bus et du module processeur, à des capteurs sensibles à des paramètres d'état représentatifs de l'état du véhicule spatial.

## Patentansprüche

1. Verfahren zum Detektieren und Passivieren von Fehlern in einem zentralisierten hierarchischen Datenverarbeitungssystem, das im Fall von Fehlern in einer feindlichen Umgebung autonom ist, das sich insbesondere, jedoch nicht notwendigerweise, an Bord eines Raumfahrzeugs befindet und das ein Prozessormodul (PM, PM1, PM2), einen mit diesem Prozessormodul verbundenen Datenverarbeitungsbus (3, 3') und mit diesem Bus verbundene Einheiten (4-8) aufweist, dadurch gekennzeichnet, daß Zustandssignale, die die korrekte oder schlechte Funktion des Prozessormoduls und jeder der Einheiten anzeigen, überwacht werden und, wenn ein Zustandssignal detektiert wird, das eine schlechte Funktion des Prozessormoduls anzeigt, ein vorgegebener Rekonfigurationszyklus des Prozessormoduls (III.1) angefordert wird und, wenn ein Signal detektiert wird, das eine schlechte Funtion einer Einheit anzeigt, der Austausch (II) dieser Einheit (C1) durch eine für dieselbe Funktion in redundanter Reservelage zur Verfügung stehende Einheit angefordert wird, und zwar nach einer Verzögerung, die mindestens gleich der Zeitdauer eines solchen Rekonfigurationszyklus des Prozessormoduls ist, wobei diese Verzögerung bei der Auslösung eines solchen Rekonfigurationszyklus des Prozessormoduls inhibiert wird.

2. Verfahren nach Anspruch 1, dadurch gekennzeichnet, daß man die Zustandssignale, die die Funktion der Einheiten anzeigen, durch das Prozessormodul überwachen läßt und daß man einen solchen Austausch der Einheit von einem Piloten (41) außerhalb des Prozessormoduls ausführen läßt.

3. Verfahren nach Anspruch 1 oder 2, dadurch gekennzeichnet, daß diese Verzögerung zwischen 0,5 und 50 Sekunden beträgt.

4. Verfahren nach Anspruch 3, dadurch gekennzeichnet, daß diese Verzögerung zwischen 0,5 und 5 Sekunden beträgt.

5. Verfahren nach einem der Ansprüche 1 bis 4, dadurch gekennzeichnet, daß man außerdem vom Prozessormodul Zustandssignale überwachen läßt, die die korrekte oder schlechte Funktion von elementaren Einheiten anzeigen, welche durch die Einheiten mit dem Bus verbunden sind, und, wenn das Prozessormodul (PM) ein Zustandssignal detektiert, das eine schlechte Funktion einer dieser elementaren Einheiten anzeigt, man durch dieses Prozessormodul den Austausch dieser elementaren Einheit durch eine elementare, in redundanter Reservelage für dieselbe Funktion zur Verfügung stehende elementare Einheit ausführen läßt, und zwar nach einer zweiten Verzögerung, die mindestens gleich der Summe aus der vorgesehenen Verzögerung vor dem Austausch einer Einheit durch eine in redundanter Reservelage für dieselbe Funktion zur Verfügung stehende Einheit und der für diesen Austausch notwendigen Zeitdauer ist, wobei diese zweite Verzögerung durch einen solchen Austausch der Einheit oder durch die Auslösung eines Rekonfigurationszyklus des Prozessormoduls (III.1) inhibiert wird.

6. Verfahren nach Anspruch 5, dadurch gekennzeichnet, daß diese zweite Verzögerung zwischen 1 und 10 Sekunden beträgt.

7. Verfahren nach Anspruch 6, dadurch gekennzeichnet, daß die erste Verzögerung etwa 0,5 Sekunden beträgt, wobei diese zweite Verzögerung etwa 1 Sekunde beträgt.

8. Verfahren nach einem der Ansprüche 1 bis 7, dadurch gekennzeichnet, daß mit dem Prozessormodul eine Vielzahl von Einheiten verbunden sind, die auf mindestens einer Ebene verteilt sind, wobei außerdem, unabhängig von den Einheiten und dem Prozessormodul, Zustandssignale (SAL) überwacht werden, die den Zustand oder die Lage des Raumfahrzeugs anzeigen, und, wenn detektiert wird, daß eines dieser Zustandssignale einen Schwellenwert übersteigt, man unabhängig vom Prozessormodul den Austausch des Prozessormoduls, des Busses und aller Einheiten durch etwaige Prozessormodule, Busse und Einheiten, die in redundanter Reservelage zur Verfügung stehen, ausführen läßt, und dies nach einer gesamten Verzögerung, die mindestens gleich der Zeit ist, welche notwendig ist, um nacheinander den Austausch des Prozessormoduls, dann denjenigen der Einheiten Ebene für Ebene durchzuführen, wobei von der höchsten Ebene ausgegangen wird.

9. Verfahren nach Anspruch 8, dadurch gekennzeichnet, daß diese gesamte Verzögerung mindestens 1 Minute beträgt.

10. Verfahren nach Anspruch 9, dadurch gekennzeichnet, daß diese gesamte Verzögerung zwischen 1 und 10 Minuten beträgt.

11. Verfahren nach Anspruch 10, dadurch gekennzeichnet, daß diese Schwellenzahl gleich 1 ist.

12. Verfahren nach Anspruch 10 oder 11, dadurch gekennzeichnet, daß diese vorgegeben Zeitdauer zwischen 5 und 60 Sekunden beträgt.

13. Verfahren nach Anspruch 13, dadurch gekennzeichnet, daß diese vorgegebene Zeitdauer etwa 10 Sekunden beträgt.

14. Verfahren nach einem der Ansprüche 1 bis 13, dadurch gekennzeichnet, daß zum Ausführen eines solchen Rekonfigurationszyklus des Prozessormoduls oder eines Austausches einer Einheit die Erzeugung (39) eines Rekonfigurationsimpulses mit bestimmten Merkmalen angefordert wird und dadurch, daß, während die Zustandssignale eine korrekte Funktion anzeigen, die Erzeugung mindestens eines Testimpulses angefordert wird, der nur eines dieser bestimmten Merkmale aufweist, und verifiziert wird, daß dieser Testimpuls dieses gewünschte der bestimmten Merkmale aufweist.

15. Verfahren nach Anspruch 14, dadurch gekennzeichnet, daß die bestimmten Merkmale die Spannung und die Dauer des Rekonfigurationsimpulses sind.

16. Verfahren zum Detektieren und Passivieren von Fehlern in einem zentralisierten hierarchischen Datenverarbeitungssystem, das im Fall von Fehlern in einer feindlichen Umgebung eine große Autonomie zeigen muß, das sich insbesondere, jedoch nicht notwendigerweise, an Bord eines Raumfahrzeugs befindet und Komponenten (PM, 4-8) aufweist, die auf mehreren Ebenen (I, II, III) verteilt sind, darunter ein Prozessormodul (PM, PM1, PM2) auf der höchsten Ebene (III), dadurch gekennzeichnet, daß Zustandssignale überwacht werden, die die korrekte oder schlechte Funktion dieser Komponenten anzeigen, und, wenn ein Zustandssignal detektiert wird, das eine schlechte Funktion des Prozessormoduls anzeigt, ein vorgegebener Rekonfigurationszyklus des Prozessormoduls (III.1) angefordert wird und, wenn ein Signal detektiert wird, das eine schlechte Funktion einer Komponente auf einer niedrigeren Ebene anzeigt, diese Komponente durch eine andere Komponente derselben Ebene, die für dieselbe Funktion in redundanter Reservelage zur Verfügung steht, ersetzt wird, und zwar nach einer Verzögerung, welche um so länger ist, je niedriger die Ebene dieser Komponente ist, wobei diese Verzögerung für diese Ebene so vorgegeben ist, daß sie größer ist als die Summe aus einer vorgegebenen Verzögerung, die für die nächsthöhere Ebene ausgewählt ist, und der Zeitdauer des Austausches einer Komponente dieser nächsthöheren Ebene, wobei die vorgegebene Verzögerung, die für die in bezug auf die Ebene des Prozessormoduls nächstniedrigere Ebene ausgewählt ist, mindestens gleich der Zeitdauer eines solchen Rekonfigurationszyklus des Prozessormoduls ist, wobei jede für eine Komponente einer bestimmten Ebene ausgelöste Verzögerung durch die Auslösung entweder eines Rekonfigurationszyklus des Prozessormoduls oder eines Ersetzungszyklus einer Komponente, von der diese bestimmten Komponente abhängt, auf einer höheren Ebene inhibiert wird.

17. Verfahren nach einem der Ansprüche 1 bis 16, dadurch gekennzeichnet, daß dieser vorgegebene Rekonfigurationszyklus des Prozessormoduls ein Ausschalten und ein Wiedereinschalten dieses Prozessormoduls umfaßt.

18. Verfahren nach Anspruch 17, dadurch gekennzeichnet, daß bei der Auslösung eines Rekonfigurationszyklus des Prozessormoduls ein Zeitgeber (35) ausgelöst wird und die Anzahl der Detektierungen eines Zustandssignals, das eine schlechte Funktion des Prozessormoduls (WD) anzeigt, im Verlauf einer vorgegebenen Zeitdauer, die von dieser Auslösung an zu zählen ist, gezählt (35) wird, diese Anzahl mit einer Schwellenzahl verglichen wird und, wenn diese Anzahl diese Schwellenzahl erreicht, der Austausch (III.2) dieses Prozessormoduls (PM1) durch ein anderes Prozessormodul, das in redundanter Reservelage zur Verfügung steht, angefordert wird.

19. Zentralisiertes hierarchisches Datenverarbeitungssystem, das im Fall von Fehlern in einer feindlichen Umgebung autonom ist und das sich insbesondere, jedoch nicht notwendigerweise, an Bord eines Raumfahrzeugs befindet und eine Berechnungseinheit (2) und Einheiten (C) aufweist, die auf einer niederen Ebene (II) verteilt sind und mit einem Prozessormodul (PM, PM1, PM2) verbunden sind, das Teil der Berechnungseinheit ist, dadurch gekennzeichnet, daß die Berechnungseinheit so ausgelegt ist, daß sie Zustandssignale, die die korrekte oder schlechte Funktion des Prozessormoduls und jeder der Einheiten anzeigen, überwacht und außerdem ein Rekonfigurationsmodul (RM) aufweist, das vom Prozessormodul getrennt ist und, mit einem Datenübertragungsbus (28) verbunden, einen Prozessormodul-Rekonfigurationsblock (23), der dafür ausgelegt ist, als Funktion von Zustandssignalen einen Impuls auszusenden, der dazu bestimmt ist, einen Rekonfigurationszyklus des Prozessormoduls auszulösen, einen Selbsttestblock (21), einen Testverifizierungsblock (24), der mit dem Ausgang des Prozessormodul-Rekonfigurationsblocks verbunden ist, einen Sicherungsspeicherblock (27), ein Schnittstellenmodul (INT) zum Prozessormodul und einen zweiten Rekonfigurationsblock (25) aufweist, der mit dem Bus verbunden ist und dafür ausgelegt ist, auf Anforderung des Prozessormoduls als Funktion von Zustandssignalen einen Rekonfigurationsimpuls zu erzeugen, der für eine der Einheiten der niedrigen Ebene bestimmt ist, und zwar nach einer Verzögerung, die mindestens gleich der Zeitdauer eines solchen Rekonfigurationszyklus des Prozessormoduls ist.

20. System nach Anspruch 19, dadurch gekennzeichnet, daß das Prozessormodul eine Anschlußklemme zur Steuerung der Ein-/Aus-Funktion aufweist, die mit einem Ausgang des Prozessormodul-Rekonfigurationsblocks verbunden ist, wobei dieses Rekonfigurationsmodul eine Anschlußklemme zur Steuerung der Ein-/Aus-Funktion aufweist, die mit einem vom Prozessormodul unabhängigen Modul verbunden ist.

21. System nach Anspruch 19 oder 20, dadurch gekennzeichnet, daß diese Berechnungseinheit ein zweites Prozessormodul (PM2), das in redundanter Reservelage zur Verfügung steht, und ein zweites Rekonfigurationsmodul in redundanter Reservelage aufweist.

22. System nach einem der Ansprüche 19 bis 21, dadurch gekennzeichnet, daß dieses Rekonfigurationsmodul außerdem durch von den Einheiten, dem Bus und dem Prozessormodul unabhängigen Leitungen (2A) mit Sensoren verbunden ist, die auf Zustandsparameter ansprechen, welche den Zustand des Raumfahrzeugs anzeigen.

## Claims

1. Method of detecting and passivating faults in a self-contained centralised hierarchical data processing system in a hostile environment, in particular, but not necessarily, on board a spacecraft, comprising a processor module (PM, PM1, PM2), a data processing bus (3, 3') connected to said processor module and units (4-8) connected to said bus and characterised in that status signals representative of correct operation or malfunctioning of the processor module and of each of the units are monitored and if a status signal is detected representing malfunctioning of the processor module a predetermined processor module reconfiguration cycle (III.1) is commanded and if a signal is detected representing malfunctioning of a unit replacement (II) of said unit (C1) by an available cold redundant unit implementing the same function is commanded after a time-delay at least equal to the duration of a processor module reconfiguration cycle, said time-delay being disabled on instigation of a processor module reconfiguration cycle.

2. Method according to claim 1 characterised in that the status signals representing operation of the units are monitored by the processor module and a unit is replaced by a driver (41) external to the processor module.

3. Method according to claim 1 or claim 2 characterised in that said time-delay is between 0.5 and 50 seconds.

4. Method according to claim 3 characterised in that said time delay is between 0.5 and 5 seconds.

5. Method according to any one of claims 1 to 4 characterised in that status signals representing correct operation or malfunctioning of basic units connected to the bus by said units are monitored by the processor module and if the processor module (PM) detects a status signal representing malfunctioning of one of said basic units said processor module replaces said basic unit with an available cold redundant unit implementing the same function after a second time-delay at least equal to the sum of the time-delay preceding the replacement of the unit by an available cold redundant unit and the time needed to effect said replacement, said second time-delay being disabled by replacement of a unit or by the instigation of a processor module reconfiguration cycle (III.1).

6. Method according to claim 5 characterised in that said second time-delay is between one and 10 seconds.

7. Method according to claim 6 characterised in that the first time-delay is approximately 0.5 seconds and said second time-delay is approximately one second.

8. Method according to any one of claims 1 to 7 characterised in that a plurality of units on at least one level are connected to the processor module and independently of said units and the processor module status signals (SAL) representing the status or the attitude of the spacecraft are monitored and if violation of a threshold value by any of said status signal is detected the processor module, bus and all units are replaced independently of the processor module by an available cold redundant processor module, bus or unit after an overall time-delay at least equal to the time required successively to replace the processor module and then the units level by level starting at the highest level.

9. Method according to claim 8 characterised in that said overall time-delay is at least one minute.

10. Method according to claim 9 characterised in that said overall time-delay is between one and 10 minutes.

11. Method according to claim 10 characterised in that said threshold number is equal to 1.

12. Method according to claim 10 or claim 11 characterised in that said given period is between five and 60 seconds.

13. Method according to claim 13 characterised in that said given period is approximately 10 seconds.

14. Method according to any one of claims 1 to 13 characterised in that to effect a processor module reconfiguration cycle or to replace a unit the generation of a reconfiguration pulse of given characteristics is commanded (39) and in that when the status signals represent correct operation the generation of at least one test pulse having one only of said given characteristics is commanded and whether said test pulse has the intended given characteristic is verified.

15. Method according to claim 14 characterised in that said given characteristics are the voltage and the duration of the reconfiguration pulse.

16. Method of detecting and passivating faults in a centralised hierarchical data processing system required to be highly fault tolerant in a hostile environment, in particular, but not necessarily on board a spacecraft, comprising components (PM, 4-8) on a plurality of levels (I, II, III) including a processor module (PM, PM1, PM2) on the highest level (III), characterised in that status signals representative of correct operation or malfunctioning of said components are monitored and if a status signal representing malfunctioning of the processor module is detected a predetermined processor module reconfiguration cycle (III.1) is commanded and if a signal is detected representing malfunctioning of a lower level component said component is replaced by another available cold redundant component of the same level implementing the same function after a time-delay inversely proportional to the level of said component, said time-delay being predetermined for this level and greater than the sum of a predetermined time-delay chosen for the next higher level and of the time to replace a component of the next higher level, the predetermined time-delay selected for the next lower level to the level of the processor module being at least equal to the duration of a processor module reconfiguration cycle, a time delay instigated for a component of a given level being disabled by the instigation at a higher level of a processor module reconfiguration cycle or a replacement cycle for another component on which said first component is dependent.

17. Method according to any one of claims 1 to 16 characterised in that said predetermined processor module reconfiguration cycle includes turning said processor module off and then on.

18. Method according to claim 17 characterised in that a clock (35) is started on instigating a processor module reconfiguration cycle and the number of times in a predetermined period starting from the starting of the clock a status signal is detected representing malfunctioning of the processor module (WD) is counted (35) and this number is compared with a threshold number and if said number reaches said threshold number the replacement (III.2) of said processor module (PM1) by another available cold redundant processor module is commanded.

19. Self-contained centralised hierarchical data processing system in a hostile environment such as, but not necessarily, on board a spacecraft, comprising a computer unit (2) and units (C) on a lower level (II) and connected to a processor module (PM, PM1, PM2) which is part of the computer unit, characterised in that the computer unit is adapted to monitor status signals representative of correct operation or malfunctioning of the processor module and each of the units and further comprises a reconfiguration module (RM) separate from the processor module comprising a processor module reconfiguration unit (23) connected to a data transfer bus (28) and adapted to emit a processor module reconfiguration cycle instigating pulse in accordance with the status signals, a self test unit (21), a test verification unit (24) connected to the output of the processor module reconfiguration unit, a backup memory unit (27), an interface module (INT) to the processor module and a second reconfiguration unit (25) connected to said bus and adapted to generate in response to a command from the processor module and in accordance with the status signals a reconfiguration pulse for one of the units of said lower level after a time-delay equal to the duration of a processor module reconfiguration cycle.

20. System according to claim 19 characterised in that the processor module comprises an on/off control terminal connected to an output of the processor module reconfiguration unit and said reconfiguration module has an on/off control terminal connected to a module independent of the processor module.

21. System according to claim 19 or claim 20 characterised in that said computer unit comprises an available second cold redundant processor module (PM2) and a second cold redundant reconfiguration module.

22. System according to any one of claims 19 to 21 characterised in that said reconfiguration module is further connected by lines (2A) independent of the units, the bus and the processor module to sensors responsive to status parameters representing the status of the spacecraft.
